(19) Europäisches Patentamt
European Patent Office
Office européen des brevets

(11) EP 3 093 807 A1

(12) # EUROPEAN PATENT APPLICATION

(43) Date of publication:
**16.11.2016 Bulletin 2016/46**

(51) Int Cl.:
***G06Q 10/06*** *(2012.01)* ***G06Q 10/10*** *(2012.01)*

(21) Application number: **16157017.1**

(22) Date of filing: **23.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.05.2015 JP 2015097290**

(71) Applicant: **Fuji Xerox Co., Ltd.**
**Minato-ku,**
**Tokyo (JP)**

(72) Inventor: **TAKATSUKA, Yohei**
**Yokohama-shi, Kanagawa (JP)**

(74) Representative: **Ward, James Norman et al**
**Haseltine Lake LLP**
**Bürkleinstrasse 10**
**80538 München (DE)**

(54) **INFORMATION PROCESSING APPARATUS, INFORMATION PROCESSING METHOD, AND INFORMATION PROCESSING PROGRAM**

(57) An information processing apparatus includes a memory, a first receiving unit, an application specifying unit, a second receiving unit, a document specifying unit, and a display. The memory stores document categories requested for past applications, information regarding documents corresponding to the document categories, and results of the past applications in association with one another. The first receiving unit receives a new application. The application specifying unit specifies a target application, which is an application similar to the new application, among the past applications stored in the memory by using the results of the past applications. The second receiving unit receives a document category requested for the new application. The document specifying unit specifies a document corresponding to the document category requested for the new application among documents corresponding to document categories associated with the specified application. The display displays information regarding the document specified by the document specifying unit.

FIG. 1

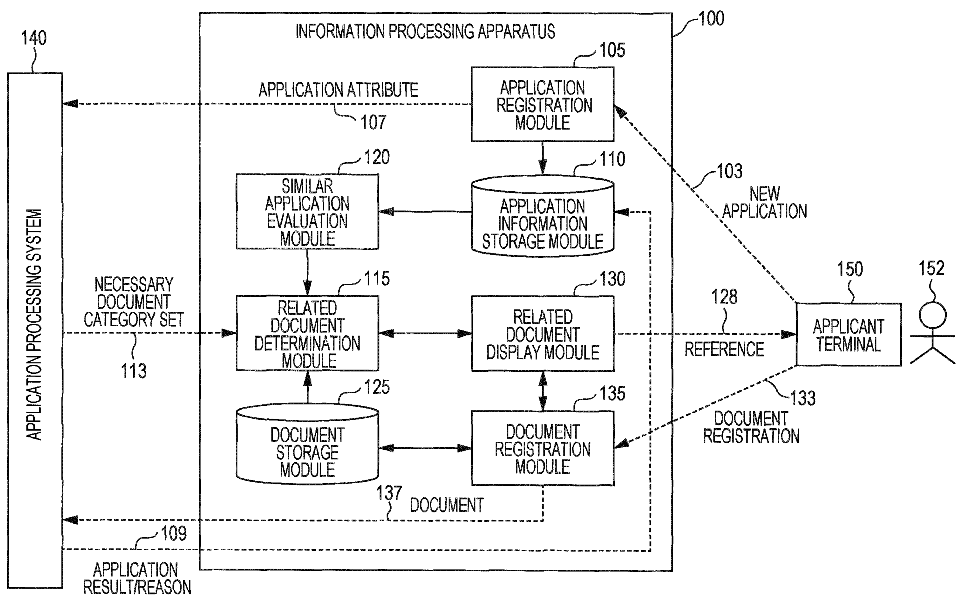


EP 3 093 807 A1

## Description

BACKGROUND

Technical Field

The present invention relates to an information processing apparatus, an information processing method, and an information processing program.

Related Art

JP-A-2008-026967 discloses a document retrieval system and a program capable of efficiently retrieving a desired document with high accuracy while reducing input time and labor. The document retrieval system includes a storage unit, a retrieval sentence creation unit, and an output unit. The storage unit writes, for each session, a retrieval sentence which is input to an input unit and a reference operation to a memory device in a time series manner. The reference operation is performed with respect to a document retrieved in regard of the retrieval sentence from the memory device by a retrieval unit. In response to a start of a new session and an input of a new retrieval sentence to the input unit, the retrieval sentence creation unit retrieves a session where a retrieval sentence including a term included in the new retrieval sentence is input from the sessions stored in the memory device. The retrieval sentence creation unit acquires, from the retrieved sessions, a retrieval sentence which is input to the input unit immediately before the reference operation. The output unit outputs the acquired retrieval sentence as a retrieval sentence which has high possibility of retrieving a suitable document corresponding to the new retrieval sentence is retrieved by the retrieval unit.
JP-A-2008-282111 discloses improving overall retrieval accuracy by avoiding a risk that a desired document may be excluded in a similar conventional document retrieval result filtering system using classification. There is disclosed that a retrieval score correction unit corrects a value of the similarity according to the commonality of the classification by referring to a correction definition table defining a correction method of the similarity through checking classification corresponding to a text input by a user with classification corresponding to each document in a document database.
JP-A-2005-346486 discloses a document retrieval device that is capable of supporting selection of a classification code which is a retrieval key and facilitating retrieving a document. The document retrieval device receives an input of a text as a retrieval condition, extracts at least one of character strings to be a first retrieval key from a text, extracts a first document group relating to each of the extracted keywords from a database, and acquires a list of classification codes for each keyword which is created by using at least a part of the classification code related to the first document group by referring the first document group which is extracted for each keyword. The document retrieval device determines the key classification code to be a second retrieval key using the list of classification code for each keyword, retrieves a second document group relating to a key classification code from the acquiring database, and presents the second document group as a retrieval result.

SUMMARY

In a conventional retrieval system, a document is classified based on keywords specified by a user or attributes of a document itself, and retrieval according to the classification information (information added to a document for classifying a document in certain management systematization, for example, a patent classification such as IPC and FI) is performed.
When performing a certain application, submission of a document belonging to a document category may be required for having the application permitted. In order to simplify a new application procedure, it may be required to specify a document having probability that the application may be approved if the document is submitted as a document corresponding to the document category which is required to a new application based on the past application results.
In such a case, when using a conventional document retrieval system, if a user does not previously know keywords or attributes of the document which are used in the submitted document in the past application, a suitable document may not be retrieved and a new application may not be simplified.
An object of the present invention is to provide an information processing apparatus, an information processing method, and an information processing program that simplify a new application by specifying a document having probability that the application may be approved if a document corresponding to a document category required for the new application is submitted.

[1] According to an aspect of the invention, there is provided an information processing apparatus including a memory, a first receiving unit, an application specifying unit, a second receiving unit, a document specifying unit, and a display. The memory stores document categories requested for past applications, information regarding documents corresponding to the document categories, and results of the past applications in association with one another. The first receiving unit receives a new application. The application specifying unit specifies a target application, which is an application similar to the new application, among the past applications stored in the memory by using the results of the past applications. The second receiving unit receives a document category requested for the new application. The document specifying unit specifies a document corresponding to the document category requested for the new application among documents corresponding to document categories associated with the specified application. The display displays information regarding the document specified by the document specifying unit.

[2] It may be the information processing apparatus according to [1], wherein the information regarding the document displayed by the display includes a link to the document.

[3] It may be the information processing apparatus according to [2], wherein the link to the document is linked to a latest edition of the document.

[4] It may be the information processing apparatus according to any one of [1] to [3], wherein the memory stores information regarding the past applications, and the application specifying unit specifies a similar application as the target application by using a similarity between information regarding the new application and information regarding the past applications stored in the memory.

[5] It may be the information processing apparatus according to any one of [1] to [4], wherein the document specifying unit specifies the document corresponding to the document category requested for the new application by using a similarity calculated by the application specifying unit.

[6] It may be the information processing apparatus according to any one of [1] to [5], wherein the display displays a common mistake in accordance with a past application that has been rejected.

[7] According to another aspect of the invention, there is provided an information processing method including: storing document categories requested for past applications, information regarding documents corresponding to the document categories, and results of the past applications in association with one another in a memory; receiving a new application; specifying a target application, which is an application similar to the new application, among the past applications stored in the memory by using the results of the past applications; receiving a document category requested for the new application; specifying a document corresponding to the document category requested for the new application among documents corresponding to document categories associated with the specified application; and displaying information regarding the specified document.

[8] According to another aspect of the invention, there is provided an information processing program causing a computer to execute a process for information processing, the process including: storing document categories requested for past applications, information regarding documents corresponding to the document categories, and results of the past applications in association with one another in a memory; receiving a new application; specifying a target application, which is an application similar to the new application, among the past applications stored in the memory by using the results of the past applications; receiving a document category requested for the new application; specifying a document corresponding to the document category requested for the new application among documents corresponding to document categories associated with the specified application; and displaying information regarding the specified document.

According to the information processing apparatus of [1], a new application can be simplified by specifying a document having probability that the application may be approved if a document corresponding to a document category required for the new application is submitted, in comparison with retrieving a document by using a document retrieval system where a document is retrieved using keywords specified by a user or classification characteristics which is classified according to attributes of a document itself.

According to the information processing apparatus of [2], the information regarding the document can include a link to the document.

According to the information processing apparatus of [3], a link to the latest edition of the document can be displayed as the link to the document.

According to the information processing apparatus of [4], the application as the target application can be specified by using the similarity between the information regarding the new application and the information regarding past applications.

According to the information processing apparatus of [5], the document corresponding to the document category requested for the new application can be specified by using the similarity.

According to the information processing apparatus of [6], a common mistake in the application can be displayed.

According to the information processing method of [7], a new application can be simplified by specifying a document having probability that the application may be approved if a document corresponding to a document category required for the new application is submitted, in comparison with retrieving a document by using a document retrieval system where a document is retrieved using keywords specified by a user or classification characteristics which is classified according to attributes of a document itself.

According to the information processing program of [8], a new application can be simplified by specifying a document having probability that the application may be approved if a document corresponding to a document category required for the new application is submitted, in comparison with retrieving a document by using a document retrieval system where a document is retrieved using keywords specified by a user or classification characteristics which is classified according to attributes of a document itself.

BRIEF DESCRIPTION OF DRAWINGS

An exemplary embodiment of the present invention will be described in detail based on the following figures, wherein:

Fig. 1 is a conceptual module configuration diagram of an example configuration according to the exemplary embodiment;
Fig. 2 is an explanatory diagram illustrating an example of a system configuration according to the exemplary embodiment;
Fig. 3 is an explanatory diagram illustrating an example of an application process using an application processing system;
Fig. 4 is an explanatory diagram illustrating an example of a process according to the exemplary embodiment;
Fig. 5 is an explanatory diagram illustrating an example of a process according to the exemplary embodiment;
Fig. 6 is an explanatory diagram illustrating an example of a process according to the exemplary embodiment;
Fig. 7 is a flowchart illustrating an example of a process according to the exemplary embodiment;
Fig. 8 is an explanatory diagram illustrating an example of a process according to the exemplary embodiment;
Fig. 9 is an explanatory diagram illustrating an example of display of a new application screen;
Fig. 10 is an explanatory diagram illustrating an example of a process according to the exemplary embodiment;
Fig. 11 is an explanatory diagram illustrating an example of a process according to the exemplary embodiment;
Fig. 12 is an explanatory diagram illustrating an example of display of an attached document registration screen;
Fig. 13 is an explanatory diagram illustrating an example of display of a candidate document screen;
Fig. 14 is an explanatory diagram illustrating an example of display of a candidate document screen;
Fig. 15 is an explanatory diagram illustrating an example of display of an attached document registration screen;
Fig. 16 is an explanatory diagram illustrating an example of a process according to the exemplary embodiment;
Fig. 17 is an explanatory diagram illustrating an example of a process according to the exemplary embodiment;
Fig. 18 is an explanatory diagram illustrating an example of a process according to the exemplary embodiment; and
Fig. 19 is a block diagram illustrating an example of a hardware configuration of a computer implementing the exemplary embodiment.

DETAILED DESCRIPTION

Hereinafter, an exemplary embodiment of the present invention will be described with reference to the attached drawings.

Fig. 1 is a conceptual module configuration diagram illustrating an example configuration according to the exemplary embodiment.

Modules are components of software (computer programs) or hardware that may be logically separated from one another in general. Thus, the modules according to the exemplary embodiment correspond to not only modules in a computer program but also modules in a hardware configuration. Therefore, the description of the exemplary embodiment includes a description of a computer program for causing a computer to function as those modules (a program for causing a computer to execute individual program steps, a program for causing a computer to function as individual units, or a program for causing a computer to implement individual functions), a system, and a method. For the convenience of description, expressions "store" and "cause ··· to store", and expressions equivalent thereto will be used. These expressions specifically mean "cause a storage device to store" or "perform control to cause a storage device to store" in the case of a computer program. The modules may correspond to functions in a one-to-one relationship. In terms of packaging, a single module may be constituted by a single program, plural modules may be constituted by a single program, or a single module may be constituted by plural programs. Also, plural modules may be executed by a single computer, or a single module may be executed by plural computers in a distributed or parallel environment. Alternatively, a single module may include another module. Hereinafter, "connection" is used to refer to a logical connection (transmission and reception of data, an instruction, a reference relationship between pieces of data, etc.) as well as a physical connection. "Predetermined" means being determined before target processing, and includes the meaning of being determined in accordance with a present situation/state or in accordance with a previous situation/state before target processing after processing according to the exemplary embodiment starts, as well as before processing according to the exemplary embodiment starts. In a case where there are plural predetermined values, the plural predetermined values may be different from one another, or two or more of the values (of course including all the values) may be the same. A description having the meaning "in the case of A, B is performed" is used as the meaning "whether A or not is determined, and B is performed if it is determined A", except for a case where determination of whether A or not is unnecessary.

A system or apparatus may be constituted by plural computers, hardware units, devices, or the like connected to one another via a communication medium, such as a network (including communication connections having a one-to-one correspondence), or may be constituted by a single computer, hardware unit, device, or the like. "Apparatus" and "system" are used synonymously. Of course, "system" does not include a man-made social "organization" (social system).

Target information is read from a storage device in individual processing operations performed by respective modules or in individual processing operations performed by a single module. After each processing operation has been performed, a processing result is written into the storage device. Thus, a description of reading from the storage device before a processing operation and writing into the storage device after a processing operation may be omitted. Here, examples of the storage device include a hard disk, a random access memory (RAM), an external storage medium, a storage device connected through a communication line, a register in a central processing unit (CPU), and the like.

An information processing apparatus 100 according to the exemplary embodiment is configured to display a document that is necessary for making an application and includes, as illustrated in Fig. 1, an application registration module 105, an application information storage module 110, a related document determination module 115, a similar application evaluation module 120, a document storage module 125, a related document display module 130, and a document registration module 135. Here, application means a procedure of applying for permission, approval, or the like to an organization such as a country or a public entity, especially an electronic procedure. Examples of such a procedure include a customs clearance procedure for import or export, a patent application procedure in a company (specifically, an application procedure from an invention division to an intellectual property division), and so forth. Hereinafter, a customs clearance procedure for import or export will be described as an example.

In general, a customs clearance procedure for import or export is carried out in response to a request made by a shipper to a customs broker or forwarder in many cases. It is necessary for the customs broker to reliably and quickly carry out a large amount of customs clearance procedure requested by the shipper. In recent years, in order to efficiently carry out a procedure for import or export, a procedure using an information communication system called Nippon Automated Cargo and Port Consolidated System (NACCS) has been utilized and an electronic procedure has been promoted. NACCS is a system for carrying out procedures for the customs or related administrative organization or related private business regarding an incoming or outgoing ship or aircraft and an imported or exported cargo.

One of customs clearance procedures with NACCS is an MSX process (declaration attachment registration process). The MSX process is a process of preparing a document (document category) that is necessary for customs clearance application (document category) and registering it in NACCS.

With the MSX process being carried out in accordance with NACCS, it is expected that a forwarder will be able to efficiently carry out the procedure, but the forwarder needs to obtain a document corresponding to a necessary document category because of the computerization of documents.

The exemplary embodiment is utilized for document management using past application information in the case of making an application in an MSX process or the like.

The application registration module 105 is connected to the application information storage module 110, an application processing system 140, and an applicant terminal 150, receives a new application 103 from the applicant terminal 150, and transmits an application attribute 107 to the application processing system 140. The application registration module 105 receives the new application 103, which is a new application. The application attribute 107 is transmitted to the application processing system 140 and is also stored in the application information storage module 110. The new application 103 is registered in the application processing system 140 via the application registration module 105 (not directly registered in the application processing system 140), and information on the new application 103 (application attribute 107) is stored in the application information storage module 110. The application attribute 107 is necessary information for application to the application processing system 140 and is included in the new application 103. The details of the application attribute 107 will be described below together with a description of the application information storage module 110.

The application information storage module 110 is connected to the application registration module 105, the similar application evaluation module 120, and the application processing system 140, and receives an application result/reason 109 from the application processing system 140. The application information storage module 110 stores document categories requested for past applications, information regarding documents corresponding to the document categories, and results of the applications in association with one another. A document category means an aim that is satisfied by a certain document set or a type of a necessary document. Examples of a document category include a document presented in an application process ("document showing a product overview", "reduction and exemption-related document") and so forth.

The application information storage module 110 may also store information regarding past applications. "Information regarding an application" may be the application attribute 107, which is used as a search item for searching for a past similar application, specifically, "the name of an item (for which a customs clearance application is made)", "export destination country", "export method", and so forth. "Information regarding a document" may include a link to a document in addition to the document. For example, as a link to a document, a uniform resource identifier (URI, including a uniform resource locator (URL)) which indicates the site of the document (information resources), the name of the document, or the like may be used.

A "result of application" stored in the application information storage module 110 may be "approved" and "rejected" (not permitted or denied). Either of them may be stored as a result of application. For example, a document in a case where an application is rejected is not recommended, and thus only a result representing "approved" may be held.

The similar application evaluation module 120 is connected to the application information storage module 110 and the related document determination module 115. The similar application evaluation module 120 specifies a target application, which is an application similar to a new application received by the application registration module 105, among the applications stored in the application information storage module 110 by using a result of the application (a past application that is stored in the application information storage module 110 and is similar to the new application). The "target application" is a past application stored in the application information storage module 110 and may be plural applications. "Specify an application by using a result of an application" may include a case of specifying an application that has been approved and a case of specifying an application that has been rejected.

The similar application evaluation module 120 may specify a similar application as a target application by using a similarity (hereinafter also referred to as a similarity score) between information regarding the new application 103 and information regarding an application stored in the application information storage module 110. Here, the "similarity" is calculated by, for example, comparing the application attribute 107 of the new application 103 with an attribute of a past application stored in the application information storage module 110. Specifically, the similarity is represented by the number or ratio of attributes that are common to both the applications (the new application 103 and the past application). If the similarity is equal to or higher than a predetermined threshold, the similar application evaluation module 120 determines that both the applications are similar to each other.

The related document determination module 115 is connected to the similar application evaluation module 120, the document storage module 125, the related document display module 130, and the application processing system 140, and receives a necessary document category set 113 from the application processing system 140. The related document determination module 115 receives document categories requested for the new application 103 that has been received by the application registration module 105. Specifically, the related document determination module 115 receives the necessary document category set 113 from the application processing system 140. The necessary document category set 113 includes the document categories corresponding to the new application 103 and requested by the application processing system 140.

The related document determination module 115 specifies a document corresponding to a document category requested for the new application 103 (the necessary document category set 113) among the documents corresponding to the document categories associated with the application specified by the similar application evaluation module 120. The specifying here includes either or both of specifying a document adaptable to the new application among the documents corresponding to document categories for which approval is given to the application and specifying a document corresponding to a document category for which rejection is given to the application as a document that needs warning indicating that the application has been rejected.

The related document determination module 115 may specify a document corresponding to the document category requested for the new application 103 by using a similarity calculated by the similar application evaluation module 120. For example, the related document determination module 115 may add the similarities of applications (generally plural but may be singular) similar to the new application 103 associated with a document so as to calculate the degree of relation (hereinafter also referred to as a relation score) of the document, and, if the degree of relation is equal to or higher than a predetermined threshold, determines that the document is a target to be displayed by the related document display module 130.

The related document display module 130 is connected to the related document determination module 115, the document registration module 135, and the applicant terminal 150, and performs a reference 128 to the applicant terminal 150. The related document display module 130 displays information regarding a document specified by the related document determination module 115. Specifically, the related document display module 130 transmits the information regarding the document so as to display it on a display device of the applicant terminal 150.

The information regarding the document displayed by the related document display module 130 may include a link (reference) to the document. Further, the link to the document may be a link to the latest edition of the document. To determine whether or not the edition of a document is the latest, the editions of documents stored in the document storage module 125 may be managed. In edition management, a document is edited plural times and each edition is managed (a change history is managed). Here, a linked document is a document of the latest edition. That is, even if a document is changed (the edition is updated), a linked document is not a document before change but is a document of the latest edition (changed document). Thus, it is not necessary to change the link.

Further, the related document display module 130 may display a common mistake on the basis of past failed applications.

The document storage module 125 is connected to the related document determination module 115 and the document registration module 135, and stores a document (including information regarding the document). The document storage module 125 stores a document 137 registered through an application (or registered through a past application). The document storage module 125 is provided in the information processing apparatus 100 in Fig. 1, but may be provided outside the information processing apparatus 100 and may be connected to the information processing apparatus 100 via a communication line or the like.

The document registration module 135 is connected to the document storage module 125, the related document display module 130, the application processing system 140, and the applicant terminal 150. The document registration module 135 receives an instruction of a document registration 133 from the applicant terminal 150, transmits the document 137 to the application processing system 140 in response to the instruction, and causes the document storage module 125 to store the document 137 and the instruction of the document registration 133. The instruction of the document registration 133 is provided to register a document that needs to be submitted in accordance with the necessary document category set 113 from the application processing system 140. In a case where the document 137 is a document that has already been stored in the document storage module 125, the document registration module 135 obtains the document 137 from the document storage module 125 and submits (transmits) the document 137 to the application processing system 140.

The application processing system 140 is connected to the application registration module 105, the application information storage module 110, the related document determination module 115, and the document registration module 135 of the information processing apparatus 100. The application processing system 140 processes the new application 103 from an applicant 152 and makes a notification about the application result/reason 109. Specifically, NACCS or the like corresponds to this process. The application processing system 140 receives the application attribute 107 from the application registration module 105, transmits the necessary document category set 113 corresponding to the application attribute 107 to the related document determination module 115, receives the document 137 corresponding to the necessary document category set 113 from the document registration module 135, and transmits the application result/reason 109 to the application information storage module 110. Of course, the application result/reason 109 from the application processing system 140 is stored in the application information storage module 110 and is also transmitted to the applicant terminal 150 via the information processing apparatus 100 so as to be presented to the applicant 152.

The applicant terminal 150 is connected to the application registration module 105, the related document display module 130, and the document registration module 135 of the information processing apparatus 100. The applicant terminal 150 makes the new application 103 to the application registration module 105 and the document registration 133 to the document registration module 135. The reference 128 is performed on the applicant terminal 150 by the document display module 130. The applicant terminal 150 includes input/output devices (keyboard, mouse, touch panel, liquid crystal display, and the like), is operated by the applicant 152, displays a result of a process performed by the information processing apparatus 100 or the application processing system 140, and is a personal computer or a mobile terminal capable of communicating with the information processing apparatus 100. Specifically, the applicant terminal 150 makes the new application 103 and the document registration 133 in accordance with operations of the applicant 152 and presents a document corresponding to the necessary document category set 113 requested from the application processing system 140 in accordance with the new application 103 in response to a display instruction provided from the related document display module 130 so that the reference 128 may be performed on the document.

Fig. 2 is an explanatory diagram illustrating an example of a system configuration according to the exemplary embodiment.

The information processing apparatus 100, the application processing system 140, an applicant terminal 150A operated by an applicant 152A, an applicant terminal 150B operated by an applicant 152B, an applicant terminal 150C operated by an applicant 152C, and a document management apparatus 260 are connected to one another via a communication line 290. The communication line 290 may be a wireless link, a wired link, or a combination thereof, and may be, for example, the Internet or an intranet as a communication infrastructure. The document management apparatus 260 has a function of a document database, stores a document as a target of the document registration 133, and transmits the document to the information processing apparatus 100. The document storage module 125 of the information processing apparatus 100 may be used as the document management apparatus 260. The information processing apparatus 100 and the application processing system 140 may be integrated together.

Fig. 3 is an explanatory diagram illustrating an example of an application process using the application processing system 140.

The example illustrated in Fig. 3 shows an outline of a process that is performed between the applicant terminal 150 and the application processing system 140 in accordance with an operation of the applicant 152. In this example, the information processing apparatus 100 is not used (an example according to the related art).

In step 302, an application A is made from the applicant terminal 150 to the application processing system 140 in accordance with an operation of the applicant 152.

In step 304, the application processing system 140 presents necessary documents corresponding to the application A to the applicant terminal 150. Here, a document category set 320 is presented. Specifically, the document category set 320 includes "document representing XX", "document identifying YY", and "ZZ permit". The document category set 320 may include one or more document categories.

In step 306, the applicant terminal 150 obtains documents 310 (necessary documents) corresponding to the document category set 320 in accordance with an operation of the applicant 152. In the above-described example, the applicant terminal 150 collects a document 310 corresponding to "document representing XX", a document 310 corresponding to "document identifying YY", and a document 310 corresponding to "ZZ permit" from the document management apparatus 260.

In step 308, the applicant terminal 150 makes an application B to the application processing system 140 by attaching the documents 310 obtained in step 306 in accordance with an operation of the applicant 152.

In step 310, the application processing system 140 notifies the applicant terminal 150 of whether or not the application B made in step 308 has been approved.

A process that is basically equivalent to the above-described process may be performed in a case where the information processing apparatus 100 according to the exemplary embodiment is inserted between the application processing system 140 and the applicant terminal 150. However, at the same time as step 304 or after step 304, the information processing apparatus 100 presents the documents corresponding to the document categories requested in step 304, and thus an operation or process performed by the applicant 152 in step 306 is reduced.

Fig. 4 is an explanatory diagram illustrating an example of a process according to the exemplary embodiment. Here, a description will be given of an application history table 400 as an example of information on past applications stored in the application information storage module 110. The application history table 400 stores an application history as records including application attributes, reference to document categories and documents used for applications, and application results/reasons.

The application history table 400 includes a No. field 412, an item field 414, a country field 416, a transport field 418, a payment field 420, a document category A field 432, a document category B field 434, a document category C field 436, a document category D field 438, a document category E field 440, a result field 452, and a reason field 454.

An application attribute 410 (corresponding to the application attribute 107) includes the No. field 412, the item field 414, the country field 416, the transport field 418, and the payment field 420. A document category set 430 (corresponding to the necessary document category set 113) includes the document category A field 432, the document category B field 434, the document category C field 436, the document category D field 438, and the document category E field 440. A result 450 (corresponding to the application result/reason 109) includes the result field 452 and the reason field 454.

The No. field 412 stores information (No.) for uniquely identifying applications in the exemplary embodiment. The item field 414 stores information representing items in the applications (for example, the names of items). The country field 416 stores information representing countries in the applications (for example, the names of countries as an exporter or importer). The transport field 418 stores information representing transport in the applications (for example, by ship or by air). The payment field 420 stores information about payment in the applications (for example, "charge" or "no charge"). The document category A field 432 stores a link to a document corresponding to a document category A. The document category B field 434 stores a link to a document corresponding to a document category B. The document category C field 436 stores a link to a document corresponding to a document category C. The document category D field 438 stores a link to a document corresponding to a document category D. The document category E field 440 stores a link to a document corresponding to a document category E. The result field 452 stores information representing results of the applications (whether or not the applications have been approved). The reason field 454 stores information representing reasons of the results of the applications.

The document management apparatus 260 includes folders 460, 462, and 464. There are folders 466, 468, 470, and 472 in the lower order of the folder 460. The folder 466 stores a document 474, the folder 468 stores documents 476 and 478, the folder 470 stores a document 480, and the folder 472 stores a document 482.

For example, the document category B field 434 of No. 1 in the application history table 400 stores a link indicating the document 474 in the document management apparatus 260, the document category D field 438 of No. 1 stores a link indicating the document 482 in the document management apparatus 260, and the document category B field 434 of No. 2 stores a link indicating the document 478 in the document management apparatus 260.

Fig. 5 is an explanatory diagram illustrating an example of a process according to the exemplary embodiment. An example of registering an application (No. 7) in the application history table 400 is illustrated.

The information processing apparatus 100 obtains information about the details of the process in the application illustrated in Fig. 3 and generates a row No. 7 in the application history table 400.

For example, it is assumed that the applicant terminal 150 makes an application by using application data (attributes) 510 in accordance with an operation of the applicant 152. The application data (attributes) 510 corresponds to the application A (corresponding to step 302) and represents item: DxxxCxxxxx, country: CN, transport: air, and payment: charge. On the basis of the application data (attributes) 510, "DxxxCxxxxx" is stored in the item field 414 in the row No. 7 of the application history table 400, "CN" is stored in the country field 416, "air" is stored in the transport field 418, and "charge" is stored in the payment field 420.

A request from the application processing system 140 (corresponding to step 304) corresponds to a presented document group 520, which indicates that document categories A, B, and E are necessary.

Subsequently, a document 572 is obtained as the document category A, a document 574 is obtained as the document category B, and a document 576 is obtained as the document category E (corresponding to step 306), these documents are submitted to the application processing system 140 (corresponding to step 308), and a notification 580 indicating that the application has been approved is provided (corresponding to step 310).

Here, on the basis of the document 572 (the document corresponding to the document category A), the document 574 (the document corresponding to the document category B), and the document 576 (the document corresponding to the document category E) that have been submitted to the application processing system 140 (corresponding to step 308), links to the respective documents are stored in the document category A field 432, the document category B field 434, and the document category E field 440 in the row No. 7 of the application history table 400. Also, on the basis of the notification 580, "○ (approved)" is stored in the result field 452.

Fig. 6 is an explanatory diagram illustrating an example of processes performed by the similar application evaluation module 120 and the related document determination module 115 according to the exemplary embodiment. Hereinafter, a description will be given of a process of predicting a document related to the new application 103 by using the application history table 400 and presenting the related document.

Referring to Fig. 6, the shaded part of the application history table 400, that is, an item 602 of No. 4, an item 604 of No. 5, an item 606 of No. 6, a country 608 of No. 2, a country 610 of No. 3, a country 612 of No. 6, a transport 614 of No. 5, a payment 616 of No. 5, and a payment 618 of No. 6 are fields having the same attribute values as those in the application data (attributes) 510 of the present application (fields storing attribute values of past applications).

The document categories A, B, and E are requested as a necessary document category 620 from the application processing system 140. Subsequently, processes are performed by the similar application evaluation module 120 and the related document determination module 115. The related document display module 130 presents the document 572 as a document corresponding to the document category A, the document 574 as a document corresponding to the document category B, and the document 576 as a document corresponding to the document category E.

First, a similar application determination process 630 performed by the similar application evaluation module 120 will be described.

In step 632, the similar application evaluation module 120 calculates similarity scores (LS) in individual attribute values between the present application (application data (attributes) 510) and individual past applications (item field 414, country field 416, transport field 418, and payment field 420) in the application history (application history table 400). An LS function counts the number of attributes that are common to both the applications. This corresponds to the number of attributes from the item 602 through the payment 618 in the individual rows of the application history table 400. The details are as follows.

LS (past application No. 1, present application) = 0
LS (past application No. 2, present application) = 1
LS (past application No. 3, present application) = 1
LS (past application No. 4, present application) = 1
LS (past application No. 5, present application) = 3
LS (past application No. 6, present application) = 3

In step 634, the similar application evaluation module 120 obtains one or more similar applications on the basis of the similarity scores of the individual past applications. Here, an application satisfying LS ≥ 2 is regarded as a similar application.

Similar application = {past application No. 5, past application No. 6}

Next, a related document determination process 640 performed by the related document determination module 115 will be described.

In step 642, the related document determination module 115 calculates, for each of the document categories that are necessary for the present application (document categories A B, and E), a relation score (RS) of a document used in a similar application. Specifically, the related document determination module 115 adds, for each document used in a similar application, a similarity score of the similar application. For example, the document 476 is used in the application No. 5 and the application No. 6 as similar applications, and thus the similarity score "3" of the application No. 5 and the similarity score "3" of the application No. 6 are added to calculate a relation score 6.

The following calculation is performed for the document category A.

RS (document 476 (DC manual.pdf)) = 6
RS (document 480 (DC pamphlet.pdf)) = 3

Relation scores are calculated also for the document categories B and E.

In step 644, the related document determination module 115 presents one or more related documents on the basis of the relation scores of the individual documents. Here, a document satisfying RS ≥ 5 is regarded as a related document.

A description will be given of a similarity score (LS) and a relation score (RS).

(1) Similarity score (LS)

A similarity score is a score representing a degree of similarity between application attributes of the present application and application attributes of a past application.

In the exemplary embodiment, the number of application attributes having the same value is used as a similarity score. An influence on the degree of similarity varies according to an attribute (for example, "an item attribute has a great influence on the degree of similarity"). Thus, addition may be performed by using a coefficient (weight) for each attribute as expressed by Equation (1).

$$LS\begin{pmatrix}\text{past application,}\\ \text{present application}\end{pmatrix} = \sum_{X\in\text{application attribute}} LP\begin{pmatrix}\text{value of attribute x of past application, value of attribute x}\\ \text{of present application, coefficient of attribute x}\end{pmatrix}$$

$$LP(\text{value 1, value 2, coefficient}) = \begin{cases}\text{(value 1 is equal to value 2) coefficient}\\ \text{(value 1 is different from value 2) 0}\end{cases} \quad \cdots$$

Equation (1)

(2) Relation score (RS)

A relation score is a score representing the degree of relation between a document and a document that is necessary for a document category of the present application.

In the exemplary embodiment, a document used in a past application that is similar to a new application is regarded as a highly related document, and the sum of similarity scores of applications in which the document has been used is regarded as a relation score. For example, a relation score is calculated by using a similarity score as expressed by equation (2).

$$RS\text{ (document)} = \sum_{\text{application using document}} LS\text{ (application, present application)} \quad \cdots \text{ Equation (2)}$$

A weight may be assigned also for calculating a relation score. For example, a weight may be assigned so that a relation score increases as a similarity score increases. Accordingly, a situation may be prevented from occurring where a relation score increases even if a similarity score is low and there are many such applications. Also, a weight may be assigned so that a relation score decreases in a case where an application is not approved though the application is a similar application.

Further, a value of a weight may be determined according to a reason why the application is not approved. For example, in a case where the reason is "the document does not correspond to a requested document category", a small weight (including 0 or less) may be assigned. In a case where the reason is "the document has expired", a relatively large weight may be assigned because permission may be given to a document of the latest edition. "A relatively large weight" means a weight smaller than a weight in a case where the application is approved and larger than a weight in a case where the reason is "the document does not correspond to a requested document category".

Fig. 7 is a flowchart illustrating an example of a process according to the exemplary embodiment.

Steps S704 to S714 correspond to a similar application obtainment process 750.

Steps S720 to S726 correspond to a related document calculation process 760.

In step S702, the application registration module 105 registers the new application 103 in the application information storage module 110 and the application processing system 140.

In step S704, the similar application evaluation module 120 obtains a past application group from the application information storage module 110.

Steps S706 to S714 are performed on each of the past applications in the past application group obtained in step S704. After these steps have been performed on all the past applications, the process proceeds to step S716.

In step S708, the similar application evaluation module 120 calculates a similarity (similarity score) between the present application and a past application on the basis of the application attributes.

In step S710, it is determined whether or not the past application has been determined as a similar application on the basis of the similarity store. If the past application has been determined as a similar application, the process proceeds to step S712. Otherwise, the process proceeds to step S714.

In step S712, the similar application evaluation module 120 adds a set of the past application and the similarity to a similar application group.

In step S716, the related document determination module 115 obtains the similar application group and a necessary document category set (necessary document category set 113).

Steps S718 to S728 are performed on each of the document categories in the document category set obtained in step S716. After these steps have been performed on all the document categories, the process proceeds to step S730.

Steps S720 to S724 are performed on each of the similar applications in the similar application group obtained in the similar application obtainment process 750. After these steps have been performed on all the similar applications, the process proceeds to step S726.

In step S722, the related document determination module 115 adds a relation score to the document that has been used as a target document category in the similar application.

In step S726, the document having a high degree of relation is regarded as a related document of the target document category.

In step S730, the related document display module 130 presents the related document.

In step S732, on the basis of the displayed related document, documents are registered in the document registration module 135 (document registration 133) in accordance with an operation of the user (applicant 152).

Steps S734 to S740 are performed on each of the documents registered in step S732. After these steps have been performed on all the documents, the process ends.

In step S736, it is determined whether or not the target document is unregistered in the document storage module 125. If the target document is unregistered, the process proceeds to step S738. Otherwise, the process proceeds to step S740.

In step S738, the document registration module 135 registers the document in the document storage module 125.

Hereinafter, a description will be given of a process of receiving a new application and registering a document corresponding to a document category requested by the application processing system 140 by using an example illustrated in Figs. 8 to 17.

Fig. 8 is an explanatory diagram illustrating an example of a process according to the exemplary embodiment.

An application history management screen 800 is displayed on the display device of the applicant terminal 150. An application history table 810 and a new application button 840 are displayed on the application history management screen 800.

The application history table 810 shows the content of the application history table 400 (details of past applications), and includes an item field 814, a country field 816, a transport field 818, a payment field 820, a result field 822, a reason field 824, and a document category field 826. The document category field 826 includes a document category A field 828, a document category B field 830, a document category C field 834, a document category D field 836, and a document category E field 838.

The item field 814 shows items in the applications. The country field 816 shows countries in the applications. The transport field 818 shows transport in the applications. The payment field 820 shows payment in the applications. The result field 822 shows results of the applications (whether or not approved). The reason field 824 shows reasons of the results of the applications. The document category field 826 shows document categories. The document category A field 828 shows a link to a document corresponding to the document category A (document regarding overview of item). The document category B field 830 shows a link to a document corresponding to the document category B (document regarding chemicals evaluation). The document category C field 834 shows a link to a document corresponding to the document category C (document regarding tariff). The document category D field 836 shows a link to a document corresponding to the document category D (document regarding approval for transport). The document category E field 838 shows a link to a document corresponding to the document category E (document regarding foreign exchange law).

The document management apparatus 260 stores documents 862, 864, 866, 868, and 870.

The document category A field 828 in the first row of the application history table 810 indicates the document 862, the document category A field 828 in the second row indicates the document 862, the document category A field 828 in the third row indicates the document 862, the document category A field 828 in the fourth row indicates the documents 864 and 868, the document category A field 828 in the fifth row indicates the documents 864 and 868, and the document category A field 828 in the sixth row indicates the documents 866 and 870.

It is assumed that the new application button 840 is selected in accordance with an operation of the applicant 152. A new application screen 900 illustrated in Fig. 9 is displayed on the display device of the applicant terminal 150.

Fig. 9 is an explanatory diagram illustrating an example of display on the new application screen 900.

An item designation field 910, a country designation field 920, a transport designation field 930, a payment designation field 940, and an application registration button 950 are displayed on the new application screen 900. The new application screen 900 is used to designate attributes of a new application in accordance with an operation of the applicant 152.

The item designation field 910 is used to designate an item. The country designation field 920 is used to designate a country. The transport designation field 930 designates transport. The payment designation field 940 is used to designate payment.

In the case of making an application with the attribute input to the item designation field 910 and so forth, the application registration button 950 is selected in accordance with an operation of the applicant 152. Upon the application registration button 950 being selected, the application history management screen 800 illustrated in Fig. 10 is displayed on the display device of the applicant terminal 150.

Fig. 10 is an explanatory diagram illustrating an example of a process according to the exemplary embodiment.

The application history table 810 illustrated in Fig. 10 corresponds to the application history table 810 illustrated in Fig. 8 to which a new application row 1010 has been added. In the new application row 1010, the attributes designated on the new application screen 900 illustrated in Fig. 9 have been input. That is, the item field 814 in the new application row 1010 shows "DxxxCxxxx", the country field 816 shows "CN (China)", the transport field 818 shows "air", and the payment field 820 shows "no charge". The result field 822, the reason field 824, and the document category field 826 are blank.

After that, the new application is transmitted to the application processing system 140. The application processing system 140 designates document categories for the application and documents corresponding to the document categories (necessary document category set 113) are requested. The application history management screen 800 after the necessary document category set 113 has been received is illustrated in Fig. 11.

Fig. 11 is an explanatory diagram illustrating an example of a process according to the exemplary embodiment.

It is assumed that the documents corresponding to the document categories A, B, C, and E are requested for the above-described application from the application processing system 140.

The example illustrated in Fig. 11 shows that, in the new application row 1010 in the application history table 810, the documents corresponding to the document category A field 828, the document category B field 830, the document category C field 834, and the document category E field 838 of the document category field 826 are necessary. This is a state of waiting for submitting attached documents. In this state, the documents have not been registered yet, and thus marks are displayed in a different color from that of the marks in the rows other than the new application row 1010. Subsequently, an attached document registration screen 1200 illustrated in Fig. 12 is displayed on the display device of the applicant terminal 150.

Fig. 12 is an explanatory diagram illustrating an example of display of the attached document registration screen 1200.

A document category A document designation field 1210, a reference button 1212, a candidate button 1214, a document category B document designation field 1220, a reference button 1222, a candidate button 1224, a document category C document designation field 1230, a reference button 1232, a candidate button 1234, a document category E document designation field 1240, a reference button 1242, a candidate button 1244, and an attached document registration button 1250 are displayed on the attached document registration screen 1200. The document category A document designation field 1210 is used to designate a document corresponding to the document category A. The reference button 1212 is used to refer to the document. The candidate button 1214 is used to display candidates for a process performed by the information processing apparatus 100, that is, candidate documents corresponding to the document category A in this application. The fields for the other document categories have the same functions.

For example, it is assumed that the candidate button 1214 is selected in accordance with an operation of the applicant 152. The above-described processes are performed by the similar application evaluation module 120 and the related document determination module 115, and the related document display module 130 displays a candidate document screen 1300 illustrated in Fig. 13 on the display device of the applicant terminal 150. The processes performed by the similar application evaluation module 120 and the related document determination module 115 may be started upon selection of the candidate button 1214 or may be started upon receipt of the necessary document category set 113 from the application processing system 140.

Fig. 13 is an explanatory diagram illustrating an example of display of the candidate document screen 1300.

A relation score display area 1310 and a registration button 1350 are displayed on the candidate document screen 1300.

The relation score display area 1310 includes a score field 1312, a document name field 1314, and a check field 1316. The score field 1312 shows relation scores of extracted documents. The document name field 1314 shows the names of the extracted documents. The check field 1316 is selected, in accordance with an operation of the applicant 152, to determine the document as a document to be submitted to the application processing system 140. The score field 1312 may be displayed in a different color from the color of the other fields if the relation score in the score field 1312 is equal to or larger than a predetermined threshold.

In a case where the registration button 1350 is selected in accordance with an operation of the applicant 152 and in a case where the selected document (the document for which the check field 1316 is selected) includes a past application case that was not approved, a candidate document screen 1400 illustrated in Fig. 14 is displayed. In a case where a past application case that was not approved is not included (in a case where all the past application cases corresponding to the selected document were approved), the attached document registration screen 1200 illustrated in Fig. 15 is displayed.

Fig. 14 is an explanatory diagram illustrating an example of display of the candidate document screen 1400 (a case where the selected documents include a case where an application was not approved). This screen is displayed in a case where the document in the first row of the relation score display area 1310 was used in a past application that was not approved.

On the candidate document screen 1400, a rejected application display screen 1410 and a registration button 1450 are displayed. The rejected application display screen 1410 displays, as a common mistake, the name of document and the reason why the application was not approved.

In the case of selecting a document again, the screen is returned to the candidate document screen 1300 illustrated in Fig. 13 and a document is selected. In a case where the registration button 1450 is pressed, the attached document registration screen 1200 illustrated in Fig. 15 is displayed.

Fig. 15 is an explanatory diagram illustrating an example of display of the attached document registration screen 1200. In a case where the registration button 1350 in the candidate document screen 1300 illustrated in Fig. 13 or the registration button 1450 in the candidate document screen 1400 illustrated in Fig. 14 is selected in accordance with an operation of the applicant 152, the attached document registration screen 1200 illustrated in Fig. 15 is displayed. The attached document registration screen 1200 shows a state where the documents corresponding to the document categories on the attached document registration screen 1200 illustrated in Fig. 12 are designated. These documents may be designated after displaying candidates by selecting the candidate button 1214 or may be designated by the applicant 152 by selecting the reference button 1212. In this way, in a case where the attached document registration button 1250 is selected in a state where the documents corresponding to the individual document categories are designated, the application history management screen 800 illustrated in Fig. 16 is displayed on the display device of the applicant terminal 150.

Fig. 16 is an explanatory diagram illustrating an example of a process according to the exemplary embodiment. Here, the application history management screen 800 shows a state of waiting for a result of the application. In the new application row 1010 that shows the new application, the result field 822 and the reason field 824 are blank. The document category A field 828, the document category B field 830, the document category C field 834, and the document category E field 838 are displayed in the same color as that of the other fields (a color indicating that there is a linked document). These fields may be displayed in a color representing a state of waiting for a result of the application.

Fig. 17 is an explanatory diagram illustrating an example of a process according to the exemplary embodiment. This is an example of display in a case where a notification about an application result (application result/reason 109) is provided from the application processing system 140. That is, an application result is output from the application processing system 140. Specifically, the application result is displayed in the result field 822 in the new application row 1010. In a case where the application result indicates that the application has been rejected, the reason is displayed in the reason field 824.

Fig. 18 is an explanatory diagram illustrating an example of a process according to the exemplary embodiment (an example of a process of calculating similarity scores performed by the similar application evaluation module 120 and an example of a process of calculating relation scores performed by the related document determination module 115).

A target application management table 1800 illustrated in part (a) of Fig. 18 stores an attribute (application attribute 107) in the present application (new application 103) and a document category requested from the application processing system 140.

The target application management table 1800 includes an item field 1804, a country field 1806, a transport field 1808, a payment field 1810, and a document category A field 1812.

The item field 1804 stores the item in the application. The country field 1806 stores the country in the application. The transport field 1808 stores the transport in the application. The payment field 1810 stores the payment in the application. The document category A field 1812 stores a document of a category A requested for the application (in this example, the field is blank because the document has not been determined).

An application history management table 1820 illustrated in part (b) of Fig. 18 includes the fields equivalent to those of the target application management table 1800 and stores past applications.

The application history management table 1820 includes a No. field 1802, the item field 1804, the country field 1806, the transport field 1808, the payment field 1810, and the document category A field 1812. The No. field 1802 stores information (No.) for uniquely identifying the application according to the exemplary embodiment.

A similarity score table 1840 illustrated in part (c) of Fig. 18 shows an example of a result of a process of calculating similarity scores performed by the similarity application evaluation module 120.

The similarity score table 1840 includes a similarity score field 1842 and a similar application field 1844. The individual rows correspond to the applications in the individual rows of the application history management table 1820 illustrated in part (b) of Fig. 18. That is, the similarity score in the first row is the similarity score for the application No. 1. The similarity score field 1842 stores similarity scores representing the similarities between the individual past applications and the present application. The similar application field 1844 stores information indicating whether or not the individual applications are similar applications. Each value in the similarity score field 1842 indicates the number of attribute values that are common to the past application and the present application. For example, in the application No. 1, four attributes including item, country, transport, and payment are common to the present application (part (a) of Fig. 18), and thus the similarity score is 4. Likewise, in the application No. 2, three attributes including item, transport, and payment are common to the present application (part (a) of Fig. 18), and thus the similarity score is 3. In the similar application field 1844, the application having a similarity score of 2 or more is regarded as a similar application.

A relation score table 1850 illustrated in part (d) of Fig. 18 shows an example of a result of a process of calculating relation scores performed by the related document determination module 115.

The relation score table 1850 stores sub-relation scores in the documents used in the document category A (in this example, three documents), and includes a relation score field 1852. The relation score field 1852 includes a document-a field 1854, a document-b field 1856, and a document-c field 1858. A sum row 1860 stores relation scores for the individual documents.

For example, in the application No. 8, a document-a and a document-b are used as the documents corresponding to the document category A. In this case, the similarity score in the application No. 8 is 3. Thus, a score "3" is input to the document-a field 1854 and the document-b field 1856 in a relation score row 1870. A score "0" is input to the document-c field 1858 because a document-c is not used. That is, in a case where a document m is used in an application n and in a case where the application n is a similar application (in a case where the similar application field 1844 shows "O"), a sub-relation score of a document in the application n is equal to the similarity score of the application n (the value in the similarity score field 1842). Otherwise (in a case where the application n is not a similar application or in a case where the document is not used in the application n), the relation score is "0". The sum of sub-relation scores is calculated for each document (specifically, the sum of the values of sub-relation scores in each column of the relation score table 1850) is calculated, and accordingly the values in the sum row 1860 of the individual documents (relation scores) are obtained.

A computer that executes a program according to the exemplary embodiment has a hardware configuration equivalent to that of a typical computer, specifically, a personal computer or a computer that may serve as a server, as illustrated in Fig. 19. That is, as a specific example, a central processing unit (CPU) 1901 is used as a processing unit (arithmetic unit), and a random access memory (RAM) 1902, a read only memory (ROM) 1903, and a hard disk (HD) 1904 are used as storage devices. A hard disk or a solid state drive (SSD) may be used as the HD 1904. The computer is constituted by the CPU 1901 that executes a program implementing the application registration module 105, the related document determination module 115, the similar application evaluation module 120, the related document display module 130, the document registration module 135, and so forth; the RAM 1902 storing the program and data; the ROM 1903 storing a program for starting the computer; the HD 1904 serving as an auxiliary storage device (or may be a flash memory or the like); a reception device 1906 that receives data in accordance with an operation performed on a keyboard, mouse, touch panel, microphone, or the like by a user; an output device 1905 such as a cathode ray tube (CRT), liquid crystal display, or speaker; a communication line interface 1907 for connecting to a communication network, such as a network interface card; and a bus 1908 for connecting these devices so that data is transmitted and received among these devices. Plural computers, each having the above-described configuration, may be connected to one another via a network.

Among elements of the above-described embodiment, an element based on a computer program is implemented by causing a system having the above-described hardware configuration to read the computer program as software, and causing software resources and hardware resources to cooperate with each other, so that the above-described embodiment is implemented.

The hardware configuration illustrated in Fig. 19 is one example configuration. The hardware configuration according to the exemplary embodiment is not limited to the configuration illustrated in Fig. 19, and any other configurations are applicable as long as the configuration is able to execute the modules described above in the exemplary embodiment. For example, some of the modules may be constituted by dedicated hardware (for example, an application specific integrated circuit (ASIC)). Some of the modules may be provided in an external system and may be connected via a communication line. Further, plural systems each having the configuration illustrated in Fig. 19 may be connected to one another via a communication line so that the systems operate in cooperation with one another. In particular, some of the modules may be incorporated into a mobile information communication apparatus (including a mobile phone, a smartphone, a mobile apparatus, a wearable computer, or the like), an information appliance, a robot, a copier, a facsimile, a scanner, a printer, or a multifunction peripheral (an image processing apparatus having two or more functions among a scan function, a print function, a copy function, a facsimile function, and so forth), other than a personal computer.

The above-described program may be provided by storing it in a recording medium, or may be provided via a communication medium. In this case, for example, the above-described program may be regarded as "a computer readable recording medium storing a program".

"The computer readable recording medium storing a program" is a computer readable recording medium storing a program and used for installing, executing, or circulating the program.

Examples of the recording medium include a digital versatile disc (DVD), for example, the standards defined by the DVD forum: DVD-R, DVD-RW, DVD-RAM, and so forth, and the standards defined by DVD+RW: DVD+R, DVD+RW, and so forth; a compact disc (CD), for example, a read only memory (CD-ROM), a CD recordable (CD-R), a CD rewritable (CD-RW), and so forth; a Blu-ray (registered trademark) Disc; a magneto-optical (MO) disc; a flexible disk (FD); a magnetic tape; a hard disk; a read only memory (ROM); an electrically erasable and programmable ROM (EEPROM, registered trademark); a flash memory; a random access memory (RAM); and a secure digital (SD) memory card.

The above-described program or part of the program may be stored or circulated by recording it on the recording medium. Alternatively, the program or part of the program may be transmitted through communication, for example, using a wired network such as a local area network (LAN), a metropolitan area network (MAN), a wide area network (WAN), the Internet, an intranet, or an extranet, or a wireless communication network, or a transmission medium that is obtained by combining the wired and wireless networks. Alternatively, the program or part of the program may be carried using carrier waves.

Further, the above-described program may be part of another program, or may be recorded on a recording medium together with another program. Alternatively, the program may be recorded on plural recording media in a distributed manner. The manner in which the program is recorded is not specified as long as the program is able to be compressed, encrypted, and restored.

The foregoing description of the exemplary embodiment of the present invention has been provided for the purposes of illustration and description. It is not intended to be exhaustive or to limit the invention to the precise forms disclosed. Obviously, many modifications and variations will be apparent to practitioners skilled in the art. The embodiment was chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

**1.** An information processing apparatus comprising:

a memory that stores document categories requested for past applications, information regarding documents corresponding to the document categories, and results of the past applications in association with one another;
a first receiving unit that receives a new application;
an application specifying unit that specifies a target application, which is an application similar to the new application, among the past applications stored in the memory by using the results of the past applications;
a second receiving unit that receives a document category requested for the new application;
a document specifying unit that specifies a document corresponding to the document category requested for the new application among documents corresponding to document categories associated with the specified application; and
a display that displays information regarding the document specified by the document specifying unit.

**2.** The information processing apparatus according to Claim 1, wherein the information regarding the document displayed by the display includes a link to the document.

**3.** The information processing apparatus according to Claim 2, wherein the link to the document is linked to a latest edition of the document.

**4.** The information processing apparatus according to any one of Claims 1 to 3, wherein
the memory stores information regarding the past applications, and
the application specifying unit specifies a similar application as the target application by using a similarity between information regarding the new application and information regarding the past applications stored in the memory.

**5.** The information processing apparatus according to any one of Claims 1 to 4, wherein the document specifying unit specifies the document corresponding to the document category requested for the new application by using a similarity calculated by the application specifying unit.

**6.** The information processing apparatus according to any one of Claims 1 to 5, wherein the display displays a common mistake in accordance with a past application that has been rejected.

**7.** An information processing method comprising:

storing document categories requested for past applications, information regarding documents corresponding to the document categories, and results of the past applications in association with one another in a memory;
receiving a new application;
specifying a target application, which is an application similar to the new application, among the past applications stored in the memory by using the results of the past applications;
receiving a document category requested for the new application;
specifying a document corresponding to the document category requested for the new application among documents corresponding to document categories associated with the specified application; and
displaying information regarding the specified document.

**8.** An information processing program causing a computer to execute a process for information processing, the process comprising:

storing document categories requested for past applications, information regarding documents corresponding to the document categories, and results of the past applications in association with one another in a memory;
receiving a new application;
specifying a target application, which is an application similar to the new application, among the past applications stored in the memory by using the results of the past applications;
receiving a document category requested for the new application;
specifying a document corresponding to the document category requested for the new application among documents corresponding to document categories associated with the specified application; and
displaying information regarding the specified document.

FIG. 1

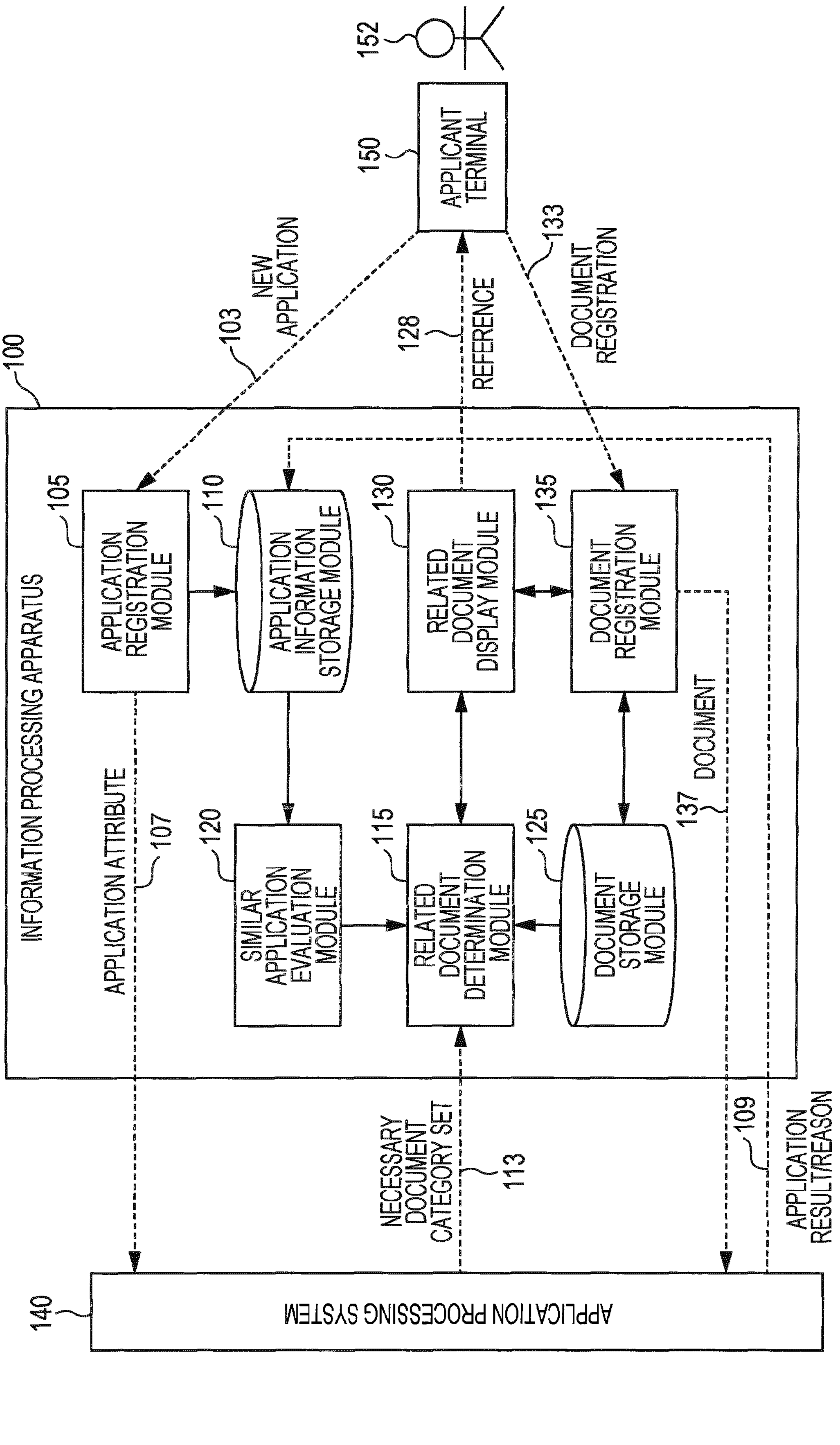

152
APPLICANT TERMINAL
150
NEW APPLICATION
103
128
REFERENCE
133
DOCUMENT REGISTRATION
100
INFORMATION PROCESSING APPARATUS
105
APPLICATION REGISTRATION MODULE
110
APPLICATION INFORMATION STORAGE MODULE
130
RELATED DOCUMENT DISPLAY MODULE
135
DOCUMENT REGISTRATION MODULE
APPLICATION ATTRIBUTE
107
120
SIMILAR APPLICATION EVALUATION MODULE
115
RELATED DOCUMENT DETERMINATION MODULE
125
DOCUMENT STORAGE MODULE
137
DOCUMENT
NECESSARY DOCUMENT CATEGORY SET
113
109
APPLICATION RESULT/REASON
140
APPLICATION PROCESSING SYSTEM

FIG. 2

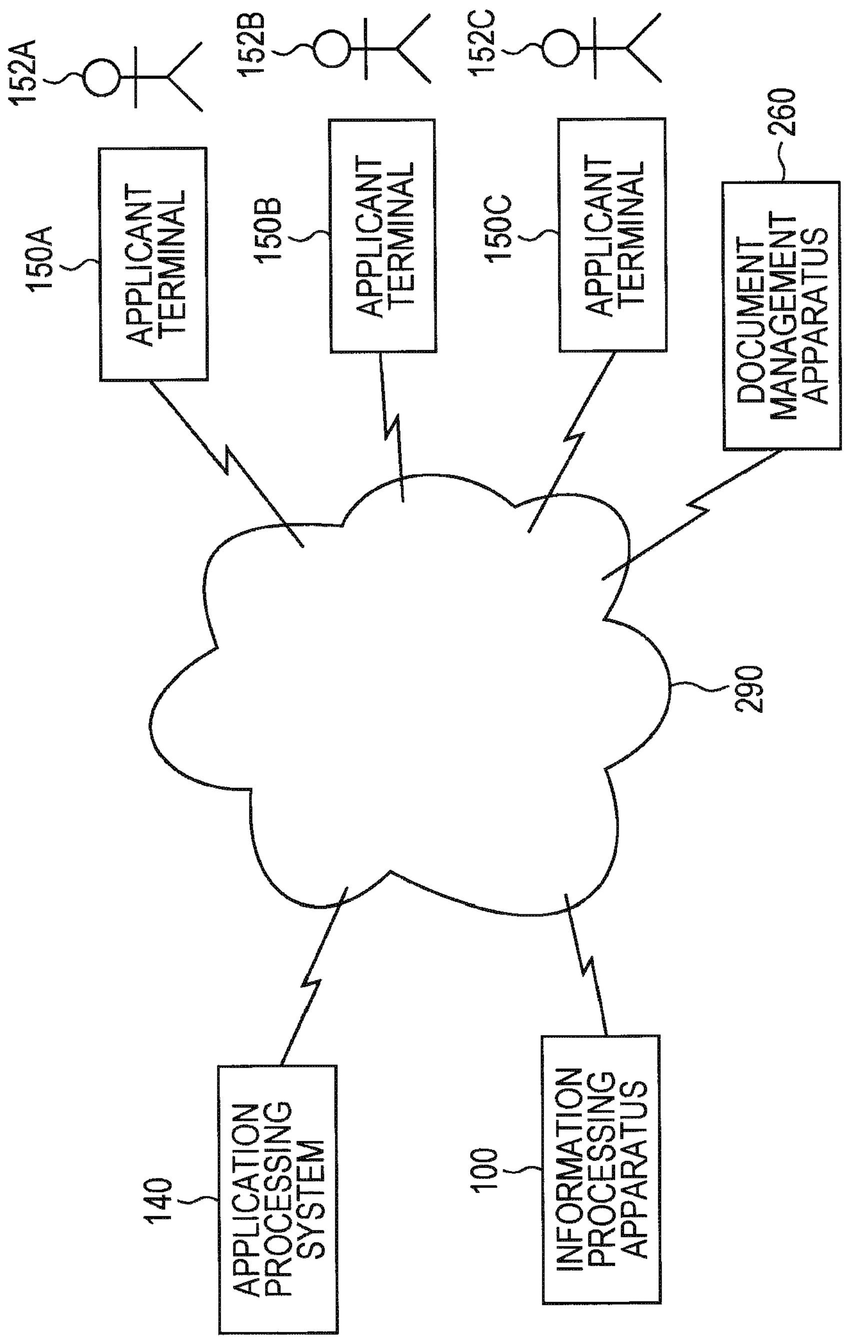
152A
152B
152C
150A
APPLICANT TERMINAL
150B
APPLICANT TERMINAL
150C
APPLICANT TERMINAL
260
DOCUMENT MANAGEMENT APPARATUS
290
140
APPLICATION PROCESSING SYSTEM
100
INFORMATION PROCESSING APPARATUS

FIG. 3

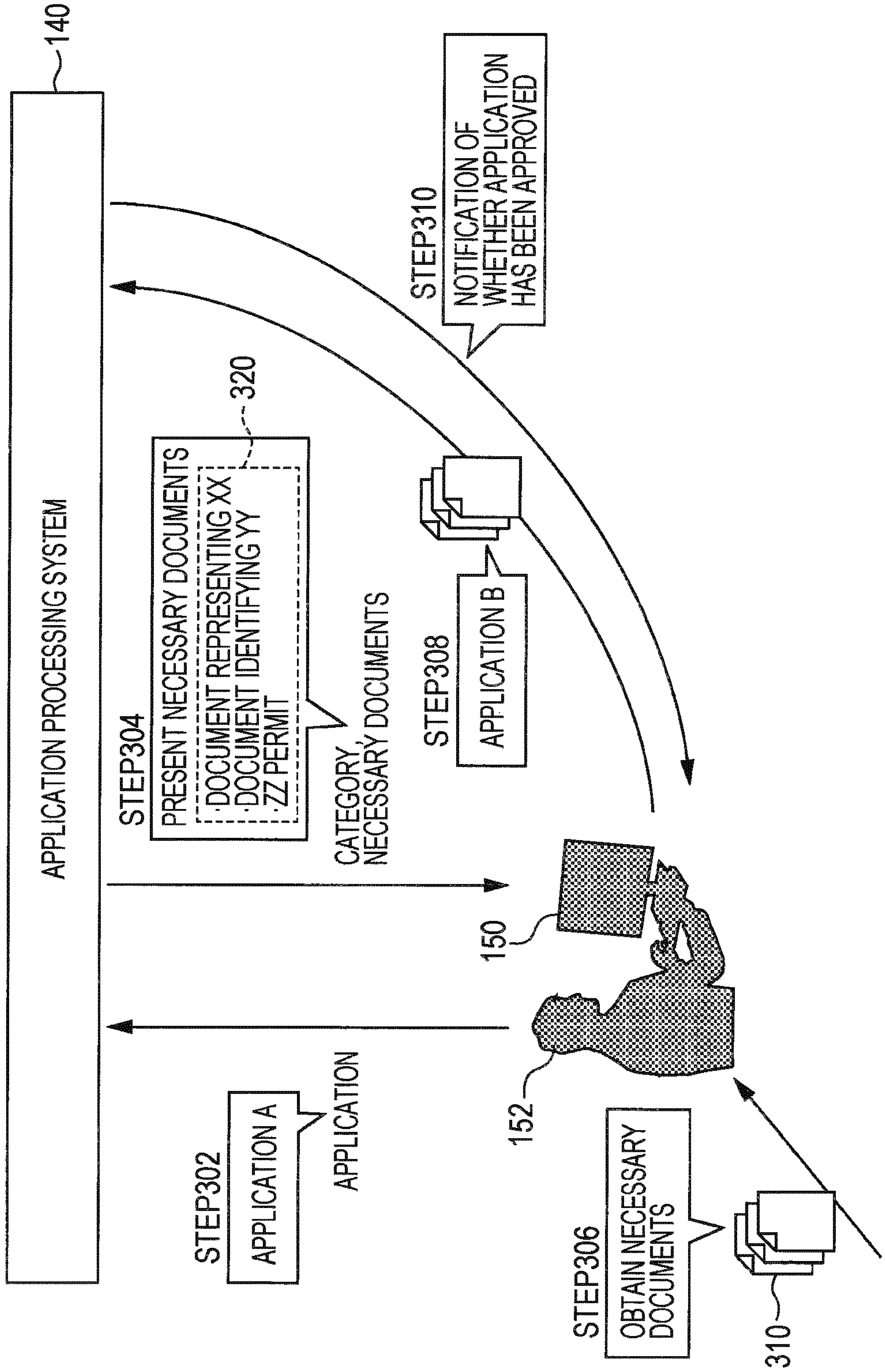
140
APPLICATION PROCESSING SYSTEM
STEP302
APPLICATION A
APPLICATION
STEP304
PRESENT NECESSARY DOCUMENTS
·DOCUMENT REPRESENTING XX
·DOCUMENT IDENTIFYING YY
·ZZ PERMIT
320
CATEGORY, NECESSARY DOCUMENTS
150
152
STEP306
OBTAIN NECESSARY DOCUMENTS
310
STEP308
APPLICATION B
STEP310
NOTIFICATION OF WHETHER APPLICATION HAS BEEN APPROVED

FIG. 4

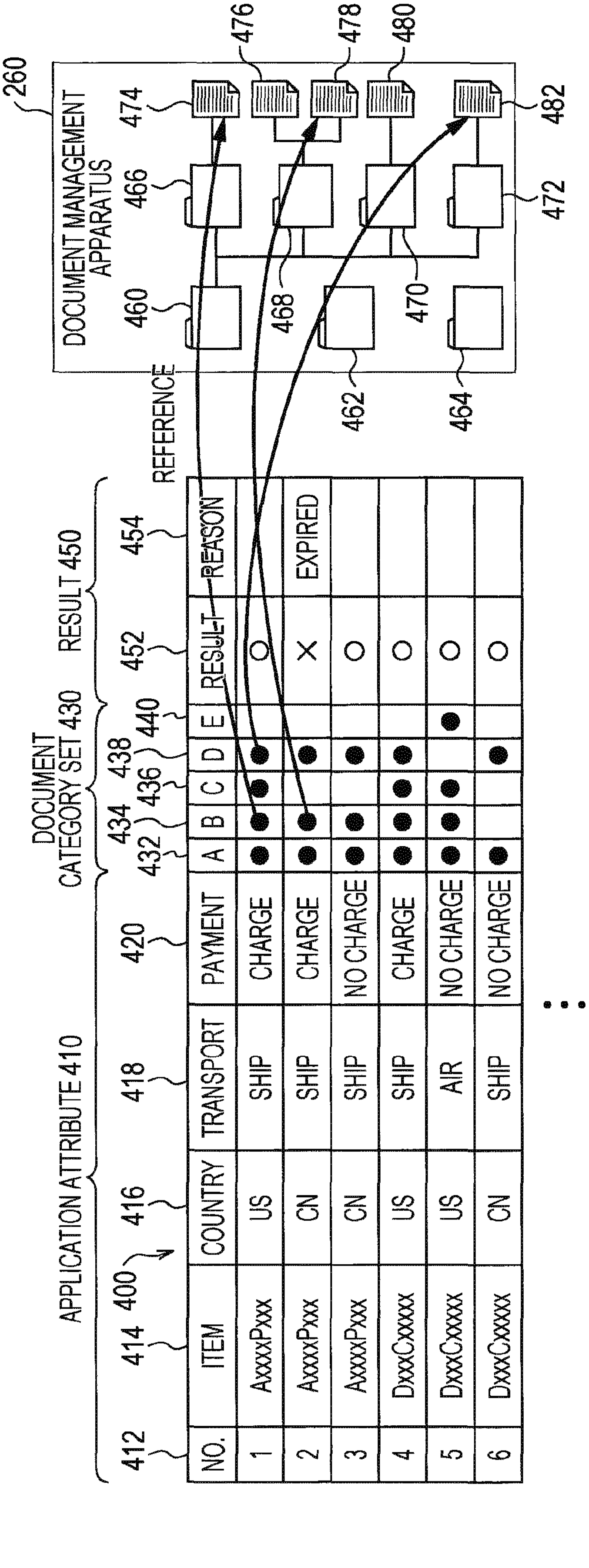
APPLICATION ATTRIBUTE 410
400
DOCUMENT CATEGORY SET 430
RESULT 450
412
414
416
418
420
432
434
436
438
440
452
454
NO.
ITEM
COUNTRY
TRANSPORT
PAYMENT
A
B
C
D
E
RESULT
REASON
1
AxxxxPxxx
US
SHIP
CHARGE
○
2
AxxxxPxxx
CN
SHIP
CHARGE
×
EXPIRED
3
AxxxxPxxx
CN
SHIP
NO CHARGE
○
4
DxxxCxxxxx
US
SHIP
CHARGE
○
5
DxxxCxxxxx
US
AIR
NO CHARGE
○
6
DxxxCxxxxx
CN
SHIP
NO CHARGE
○
REFERENCE
260
DOCUMENT MANAGEMENT APPARATUS
460
462
464
466
468
470
472
474
476
478
480
482

FIG. 5

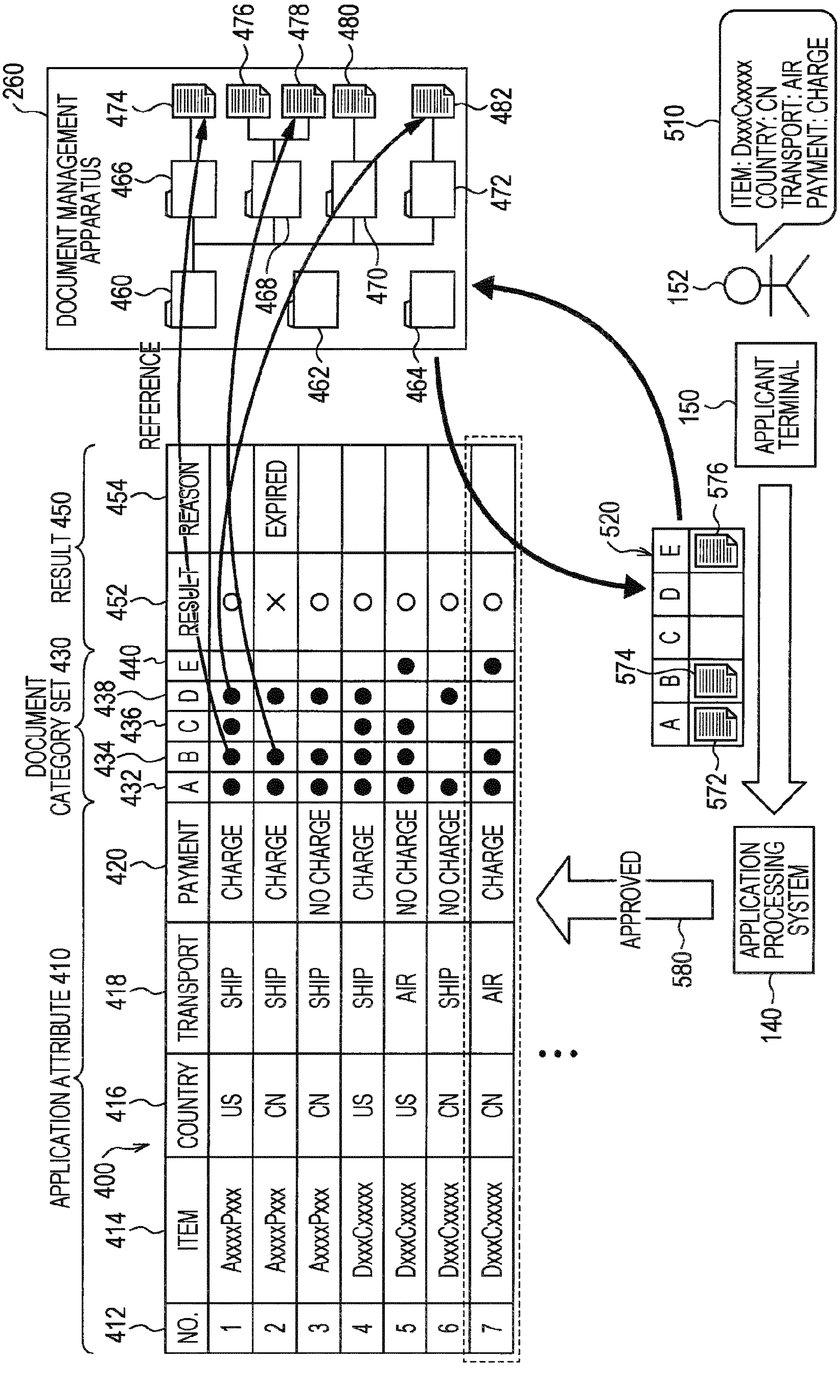
APPLICATION ATTRIBUTE 410
DOCUMENT CATEGORY SET 430
RESULT 450
400
412 414 416 418 420 432 434 436 438 440 452 454
NO. | ITEM | COUNTRY | TRANSPORT | PAYMENT | A | B | C | D | E | RESULT | REASON
1 | AxxxxPxxx | US | SHIP | CHARGE | ○
2 | AxxxxPxxx | CN | SHIP | CHARGE | × | EXPIRED
3 | AxxxxPxxx | CN | SHIP | NO CHARGE | ○
4 | DxxxCxxxxx | US | SHIP | CHARGE | ○
5 | DxxxCxxxxx | US | AIR | NO CHARGE | ○
6 | DxxxCxxxxx | CN | SHIP | NO CHARGE | ○
7 | DxxxCxxxxx | CN | AIR | CHARGE | ○
REFERENCE
260
DOCUMENT MANAGEMENT APPARATUS
460 462 464 466 468 470 472 474 476 478 480 482
520
A B C D E
572 574 576
APPROVED
580
140
APPLICATION PROCESSING SYSTEM
150
APPLICANT TERMINAL
152
510
ITEM: DxxxCxxxxx
COUNTRY: CN
TRANSPORT: AIR
PAYMENT: CHARGE

FIG. 6

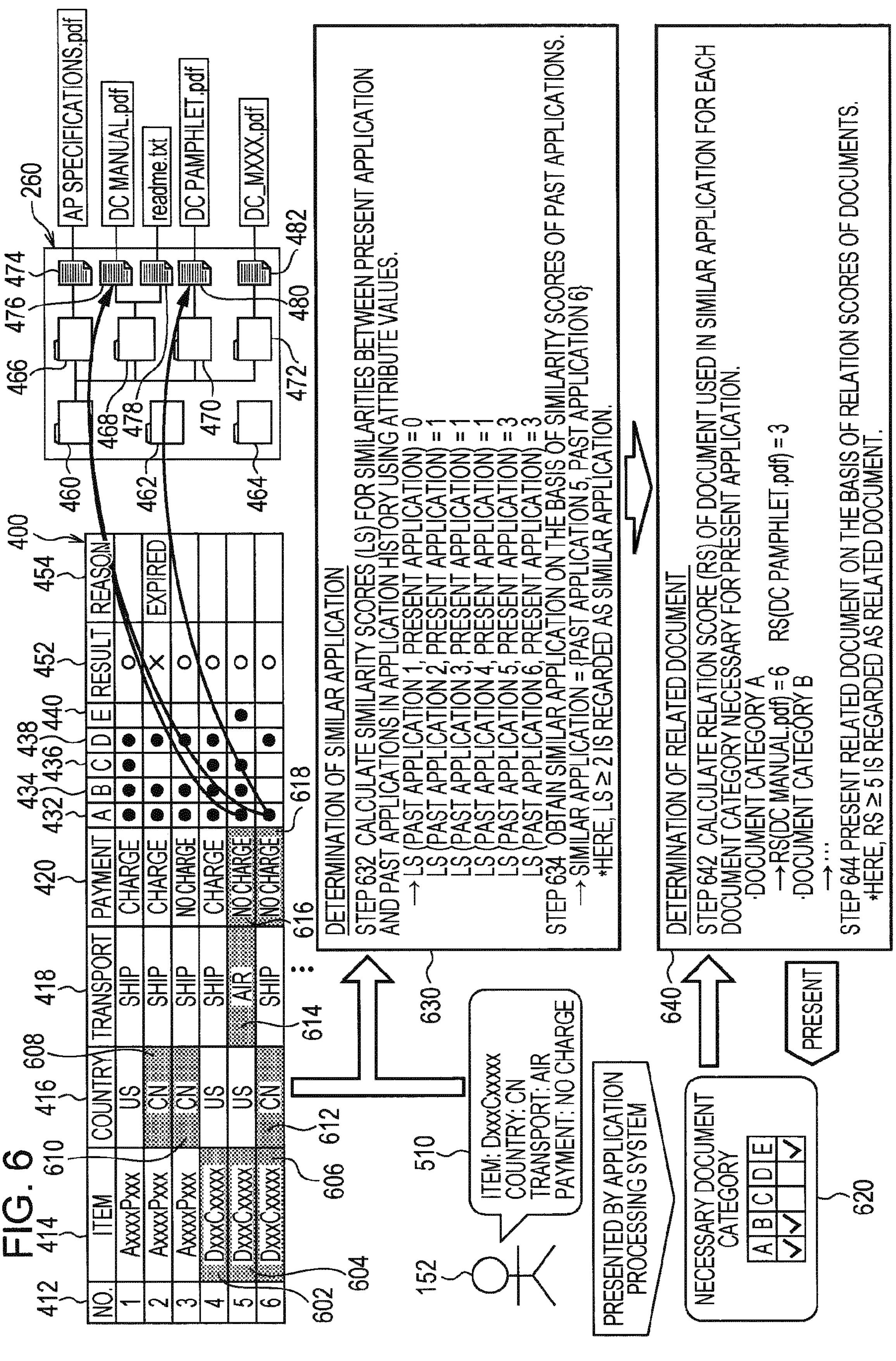

400
412 414 416 418 420 432 434 436 438 440 452 454
NO. | ITEM | COUNTRY | TRANSPORT | PAYMENT | A | B | C | D | E | RESULT | REASON
1 | AxxxxPxxx | US | SHIP | CHARGE | ● | ● | ● | ● | | ○ |
2 | AxxxxPxxx | CN | SHIP | CHARGE | ● | ● | | ● | | × | EXPIRED
3 | AxxxxPxxx | CN | SHIP | NO CHARGE | ● | ● | | ● | | ○ |
4 | DxxxCxxxxx | US | SHIP | CHARGE | ● | ● | | ● | | ○ |
5 | DxxxCxxxxx | US | AIR | NO CHARGE | ● | ● | ● | | ● | ○ |
6 | DxxxCxxxxx | CN | SHIP | NO CHARGE | ● | | | ● | | ○ |
602 604 606 608 610 612 614 616 618
260
460 462 464 466 468 470 472 474 476 478 480 482
AP SPECIFICATIONS.pdf
DC MANUAL.pdf
readme.txt
DC PAMPHLET.pdf
DC_MXXX.pdf
152
510
ITEM: DxxxCxxxxx
COUNTRY: CN
TRANSPORT: AIR
PAYMENT: NO CHARGE
PRESENTED BY APPLICATION PROCESSING SYSTEM
630
DETERMINATION OF SIMILAR APPLICATION
STEP 632 CALCULATE SIMILARITY SCORES (LS) FOR SIMILARITIES BETWEEN PRESENT APPLICATION AND PAST APPLICATIONS IN APPLICATION HISTORY USING ATTRIBUTE VALUES.
→LS (PAST APPLICATION 1, PRESENT APPLICATION) = 0
LS (PAST APPLICATION 2, PRESENT APPLICATION) = 1
LS (PAST APPLICATION 3, PRESENT APPLICATION) = 1
LS (PAST APPLICATION 4, PRESENT APPLICATION) = 1
LS (PAST APPLICATION 5, PRESENT APPLICATION) = 3
LS (PAST APPLICATION 6, PRESENT APPLICATION) = 3
STEP 634 OBTAIN SIMILAR APPLICATION ON THE BASIS OF SIMILARITY SCORES OF PAST APPLICATIONS.
→SIMILAR APPLICATION = {PAST APPLICATION 5, PAST APPLICATION 6}
*HERE, LS ≥ 2 IS REGARDED AS SIMILAR APPLICATION.
640
DETERMINATION OF RELATED DOCUMENT
STEP 642 CALCULATE RELATION SCORE (RS) OF DOCUMENT USED IN SIMILAR APPLICATION FOR EACH DOCUMENT CATEGORY NECESSARY FOR PRESENT APPLICATION.
·DOCUMENT CATEGORY A
→RS(DC MANUAL.pdf) = 6 RS(DC PAMPHLET.pdf) = 3
·DOCUMENT CATEGORY B
→...
STEP 644 PRESENT RELATED DOCUMENT ON THE BASIS OF RELATION SCORES OF DOCUMENTS.
*HERE, RS ≥ 5 IS REGARDED AS RELATED DOCUMENT.
NECESSARY DOCUMENT CATEGORY
A B C D E
✓ ✓ ✓
620
PRESENT

FIG. 7

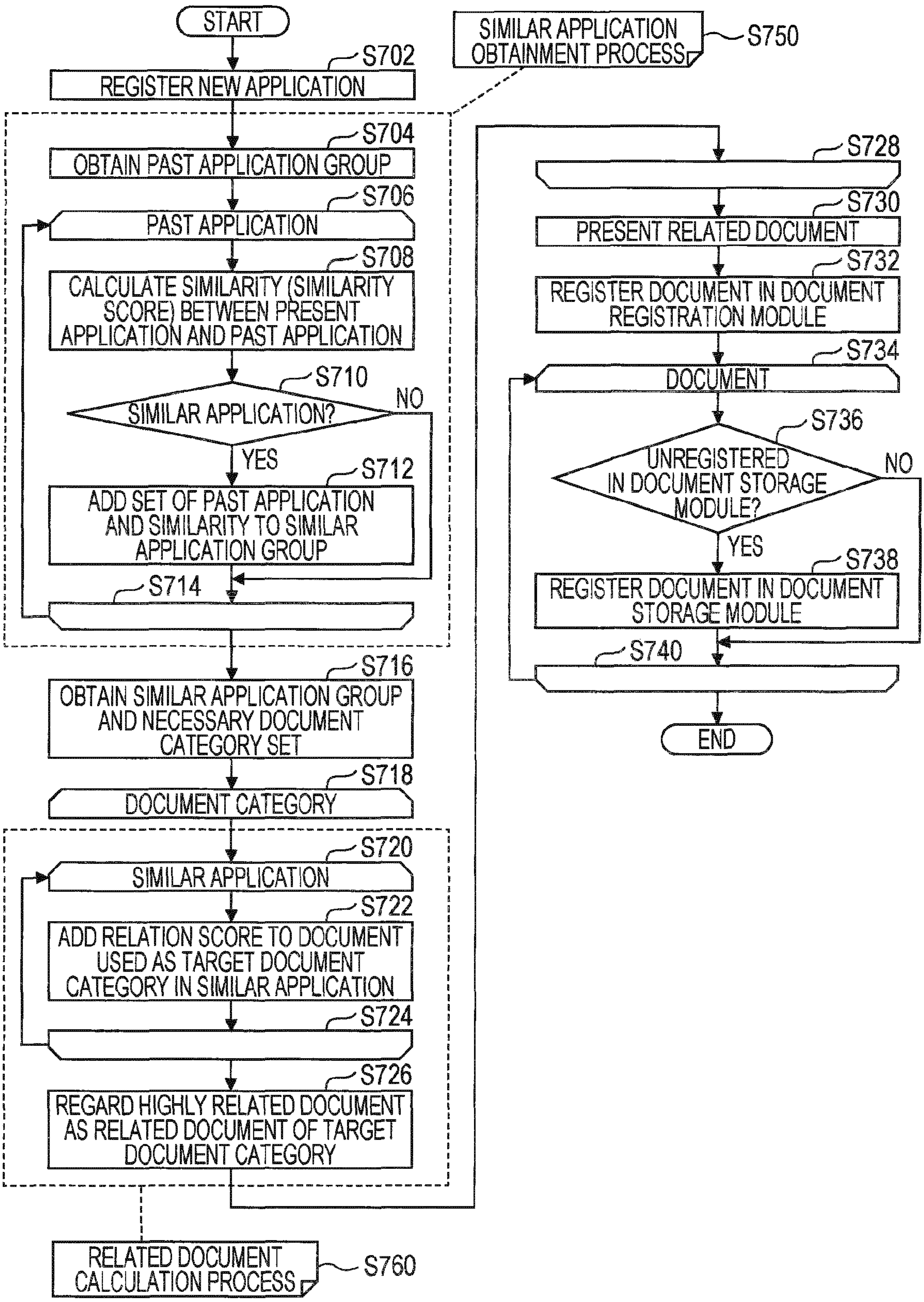

START
S702
REGISTER NEW APPLICATION
S704
OBTAIN PAST APPLICATION GROUP
S706
PAST APPLICATION
S708
CALCULATE SIMILARITY (SIMILARITY SCORE) BETWEEN PRESENT APPLICATION AND PAST APPLICATION
S710
SIMILAR APPLICATION?
NO
YES
S712
ADD SET OF PAST APPLICATION AND SIMILARITY TO SIMILAR APPLICATION GROUP
S714
S716
OBTAIN SIMILAR APPLICATION GROUP AND NECESSARY DOCUMENT CATEGORY SET
S718
DOCUMENT CATEGORY
S720
SIMILAR APPLICATION
S722
ADD RELATION SCORE TO DOCUMENT USED AS TARGET DOCUMENT CATEGORY IN SIMILAR APPLICATION
S724
S726
REGARD HIGHLY RELATED DOCUMENT AS RELATED DOCUMENT OF TARGET DOCUMENT CATEGORY
RELATED DOCUMENT CALCULATION PROCESS
S760
SIMILAR APPLICATION OBTAINMENT PROCESS
S750
S728
S730
PRESENT RELATED DOCUMENT
S732
REGISTER DOCUMENT IN DOCUMENT REGISTRATION MODULE
S734
DOCUMENT
S736
UNREGISTERED IN DOCUMENT STORAGE MODULE?
NO
YES
S738
REGISTER DOCUMENT IN DOCUMENT STORAGE MODULE
S740
END

FIG. 8

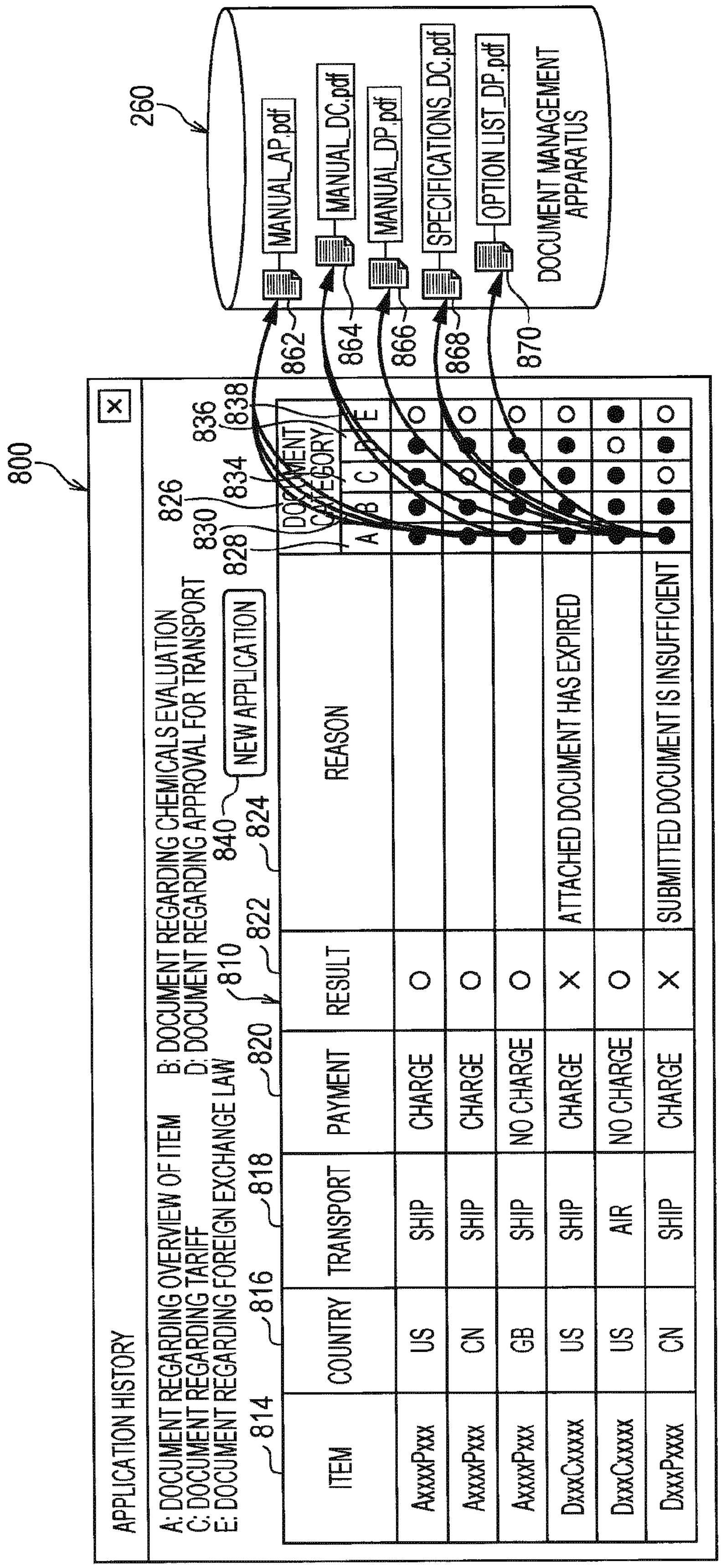
800
APPLICATION HISTORY
A: DOCUMENT REGARDING OVERVIEW OF ITEM
B: DOCUMENT REGARDING CHEMICALS EVALUATION
C: DOCUMENT REGARDING TARIFF
D: DOCUMENT REGARDING APPROVAL FOR TRANSPORT
E: DOCUMENT REGARDING FOREIGN EXCHANGE LAW
NEW APPLICATION
840
810
814
816
818
820
822
824
826
828
830
834
836
838
ITEM
COUNTRY
TRANSPORT
PAYMENT
RESULT
REASON
DOCUMENT CATEGORY
A
B
C
D
E
AxxxxPxxx
US
SHIP
CHARGE
AxxxxPxxx
CN
SHIP
CHARGE
AxxxxPxxx
GB
SHIP
NO CHARGE
DxxxCxxxxx
US
SHIP
CHARGE
ATTACHED DOCUMENT HAS EXPIRED
DxxxCxxxxx
US
AIR
NO CHARGE
DxxxPxxxxx
CN
SHIP
CHARGE
SUBMITTED DOCUMENT IS INSUFFICIENT
260
MANUAL_AP.pdf
MANUAL_DC.pdf
MANUAL_DP.pdf
SPECIFICATIONS_DC.pdf
OPTION LIST_DP.pdf
862
864
866
868
870
DOCUMENT MANAGEMENT APPARATUS

FIG. 9

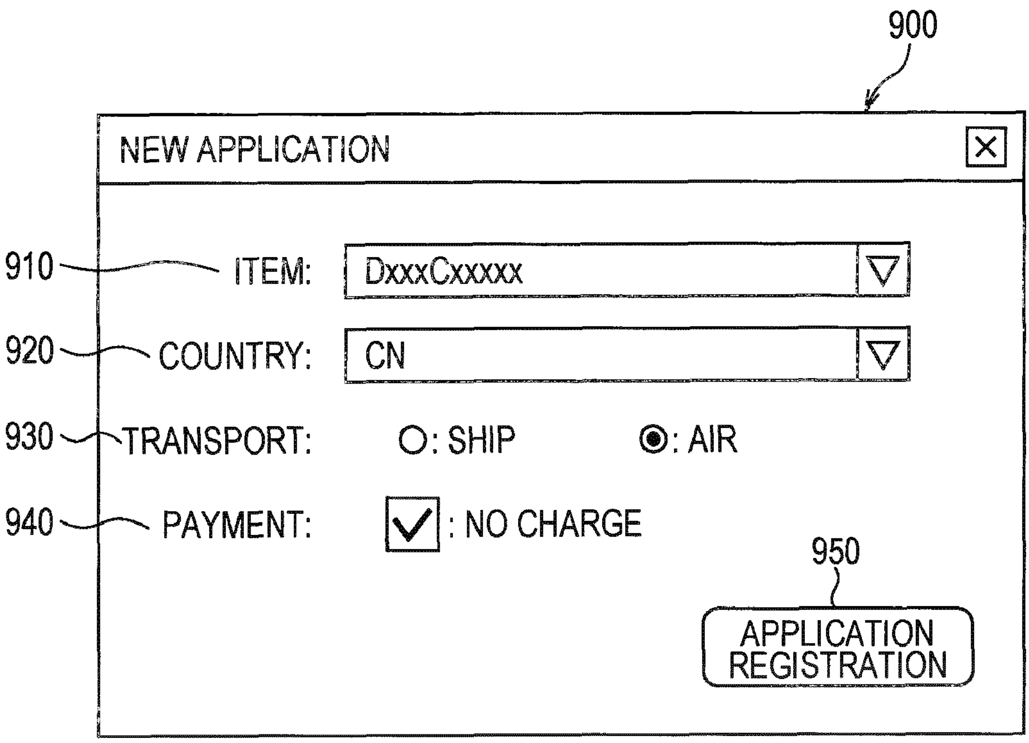
900
NEW APPLICATION
910
ITEM:
DxxxCxxxxx
920
COUNTRY:
CN
930
TRANSPORT:
: SHIP
: AIR
940
PAYMENT:
: NO CHARGE
950
APPLICATION REGISTRATION

FIG. 10

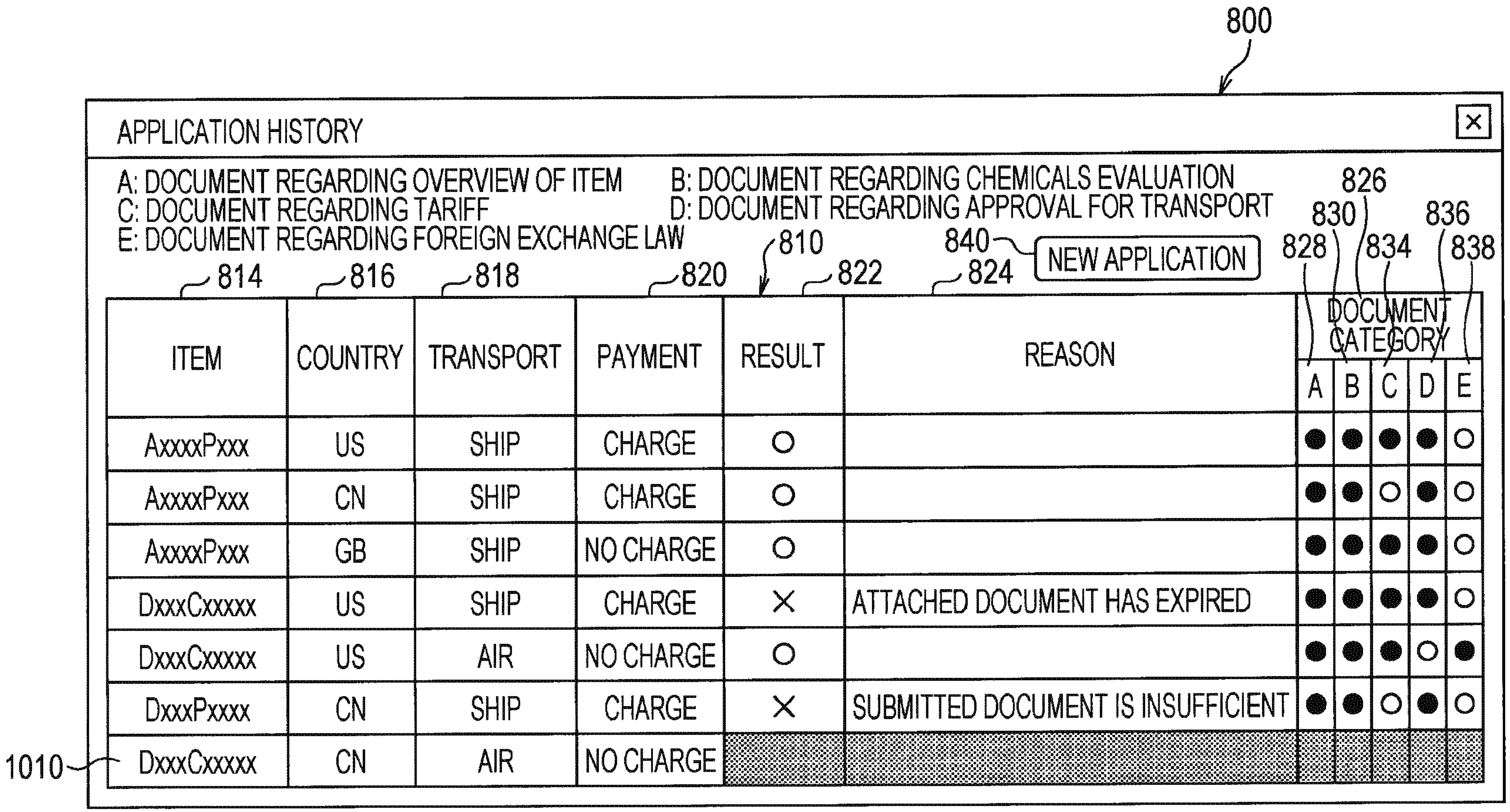
800
APPLICATION HISTORY
A: DOCUMENT REGARDING OVERVIEW OF ITEM
B: DOCUMENT REGARDING CHEMICALS EVALUATION
C: DOCUMENT REGARDING TARIFF
D: DOCUMENT REGARDING APPROVAL FOR TRANSPORT
E: DOCUMENT REGARDING FOREIGN EXCHANGE LAW
840
NEW APPLICATION
810
814
816
818
820
822
824
826
828
830
834
836
838
ITEM
COUNTRY
TRANSPORT
PAYMENT
RESULT
REASON
DOCUMENT CATEGORY
A
B
C
D
E
AxxxxPxxx
US
SHIP
CHARGE
AxxxxPxxx
CN
SHIP
CHARGE
AxxxxPxxx
GB
SHIP
NO CHARGE
DxxxCxxxxx
US
SHIP
CHARGE
ATTACHED DOCUMENT HAS EXPIRED
DxxxCxxxxx
US
AIR
NO CHARGE
DxxxPxxxx
CN
SHIP
CHARGE
SUBMITTED DOCUMENT IS INSUFFICIENT
1010
DxxxCxxxxx
CN
AIR
NO CHARGE

FIG. 11

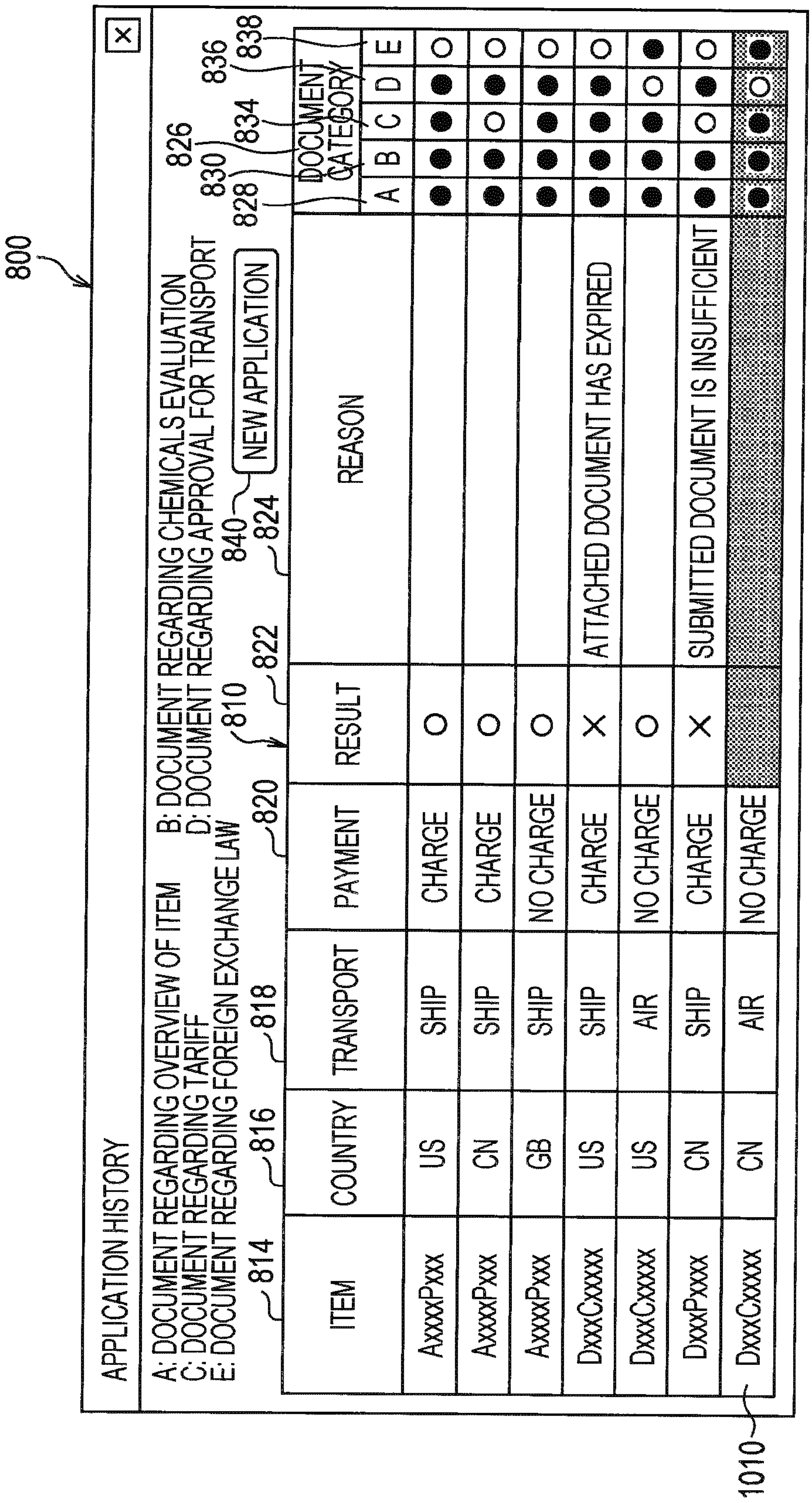
800
APPLICATION HISTORY
A: DOCUMENT REGARDING OVERVIEW OF ITEM
B: DOCUMENT REGARDING CHEMICALS EVALUATION
C: DOCUMENT REGARDING TARIFF
D: DOCUMENT REGARDING APPROVAL FOR TRANSPORT
E: DOCUMENT REGARDING FOREIGN EXCHANGE LAW
NEW APPLICATION
840
810
814
816
818
820
822
824
826
828
830
834
836
838
ITEM
COUNTRY
TRANSPORT
PAYMENT
RESULT
REASON
DOCUMENT CATEGORY
A B C D E
AxxxxPxxx US SHIP CHARGE ○ ● ● ● ● ○
AxxxxPxxx CN SHIP CHARGE ○ ● ● ○ ● ○
AxxxxPxxx GB SHIP NO CHARGE ○ ● ● ● ● ○
DxxxCxxxxx US SHIP CHARGE × ATTACHED DOCUMENT HAS EXPIRED ● ● ● ● ○
DxxxCxxxxx US AIR NO CHARGE ○ ● ● ● ○ ●
DxxxPxxxx CN SHIP CHARGE × SUBMITTED DOCUMENT IS INSUFFICIENT ● ● ○ ● ○
DxxxCxxxxx CN AIR NO CHARGE ● ● ● ○ ●
1010

FIG. 12

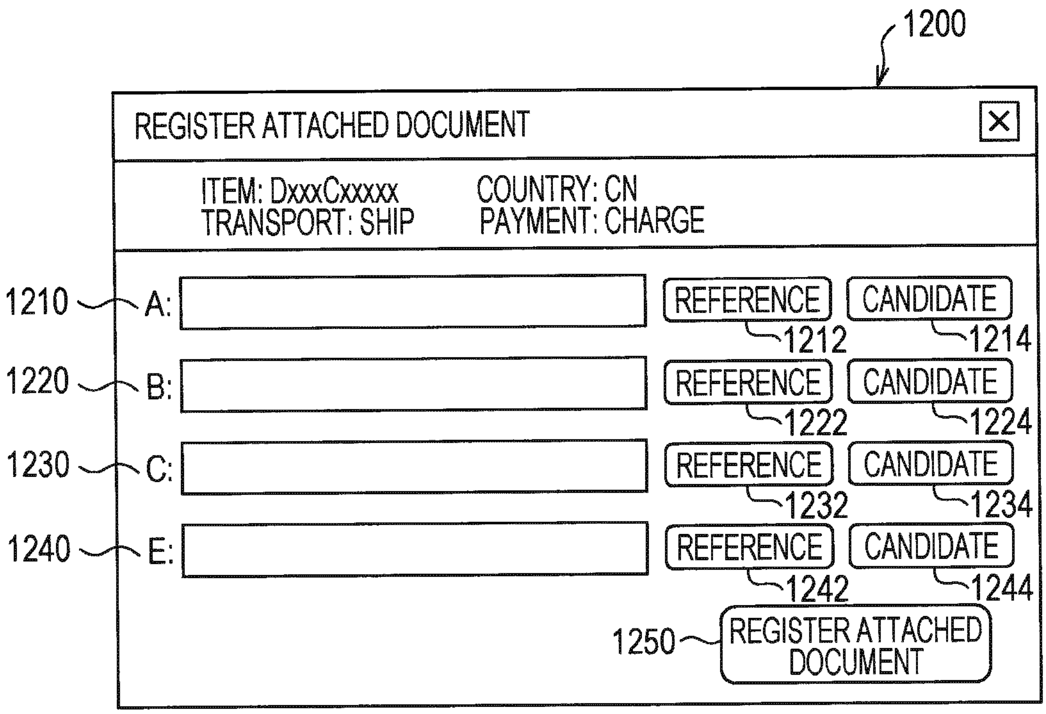
1200
REGISTER ATTACHED DOCUMENT
ITEM: DxxxCxxxxx
TRANSPORT: SHIP
COUNTRY: CN
PAYMENT: CHARGE
1210
A:
REFERENCE
CANDIDATE
1212
1214
1220
B:
REFERENCE
CANDIDATE
1222
1224
1230
C:
REFERENCE
CANDIDATE
1232
1234
1240
E:
REFERENCE
CANDIDATE
1242
1244
1250
REGISTER ATTACHED DOCUMENT

FIG. 13

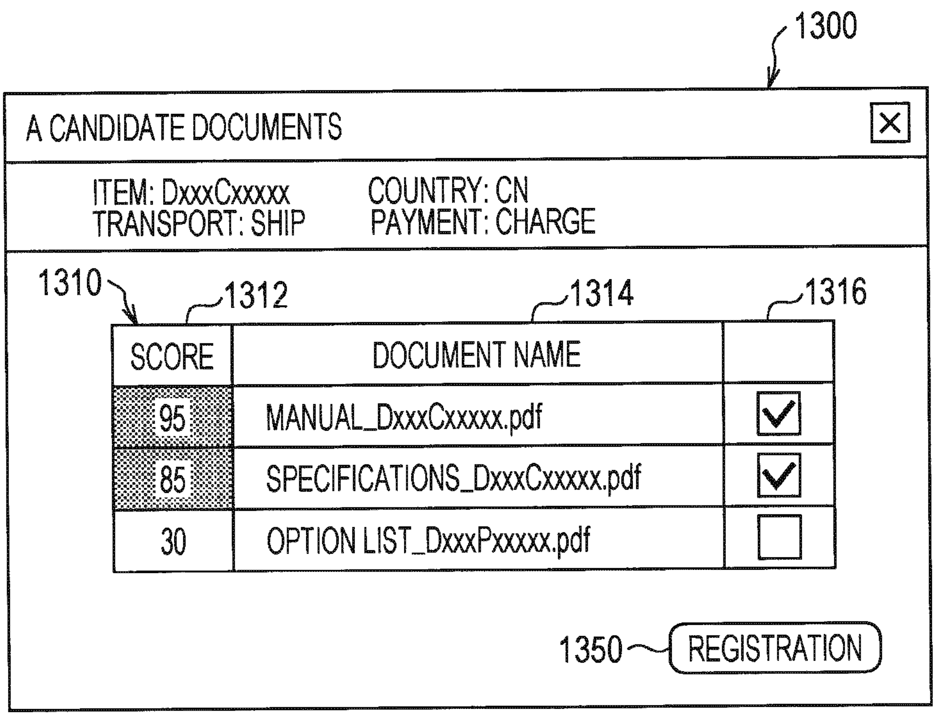
1300
A CANDIDATE DOCUMENTS
ITEM: DxxxCxxxxx
TRANSPORT: SHIP
COUNTRY: CN
PAYMENT: CHARGE
1310
1312
1314
1316
SCORE
DOCUMENT NAME
95
MANUAL_DxxxCxxxxx.pdf
85
SPECIFICATIONS_DxxxCxxxxx.pdf
30
OPTION LIST_DxxxPxxxxx.pdf
1350
REGISTRATION

FIG. 14

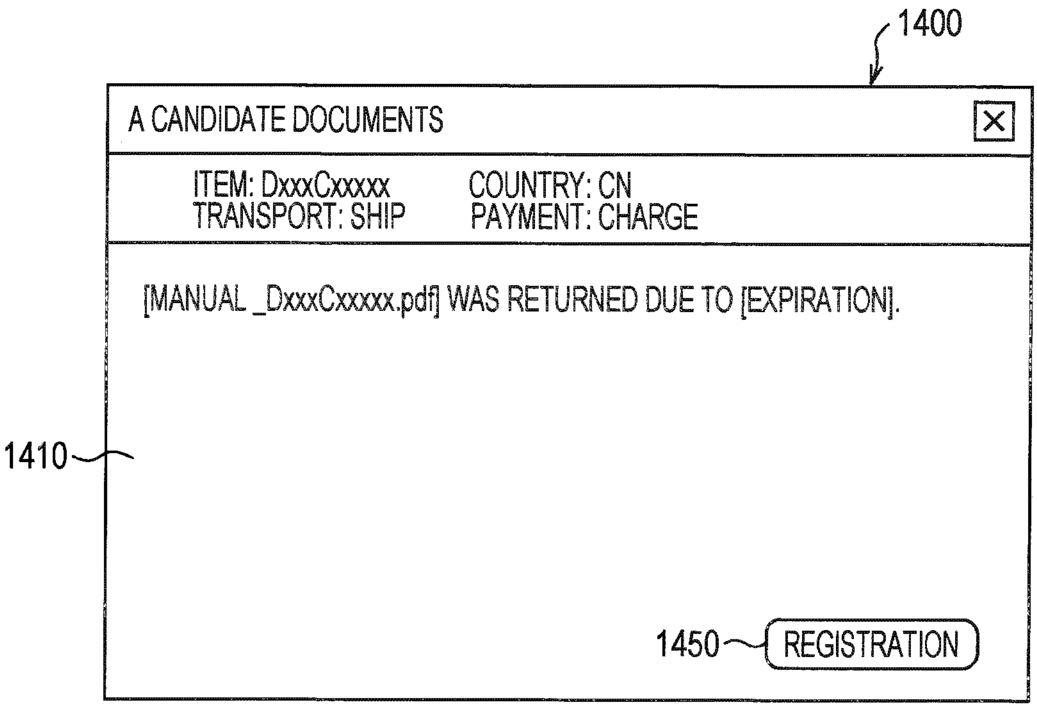
1400
A CANDIDATE DOCUMENTS
ITEM: DxxxCxxxxx
TRANSPORT: SHIP
COUNTRY: CN
PAYMENT: CHARGE
[MANUAL _DxxxCxxxxx.pdf] WAS RETURNED DUE TO [EXPIRATION].
1410
1450
REGISTRATION

FIG. 15

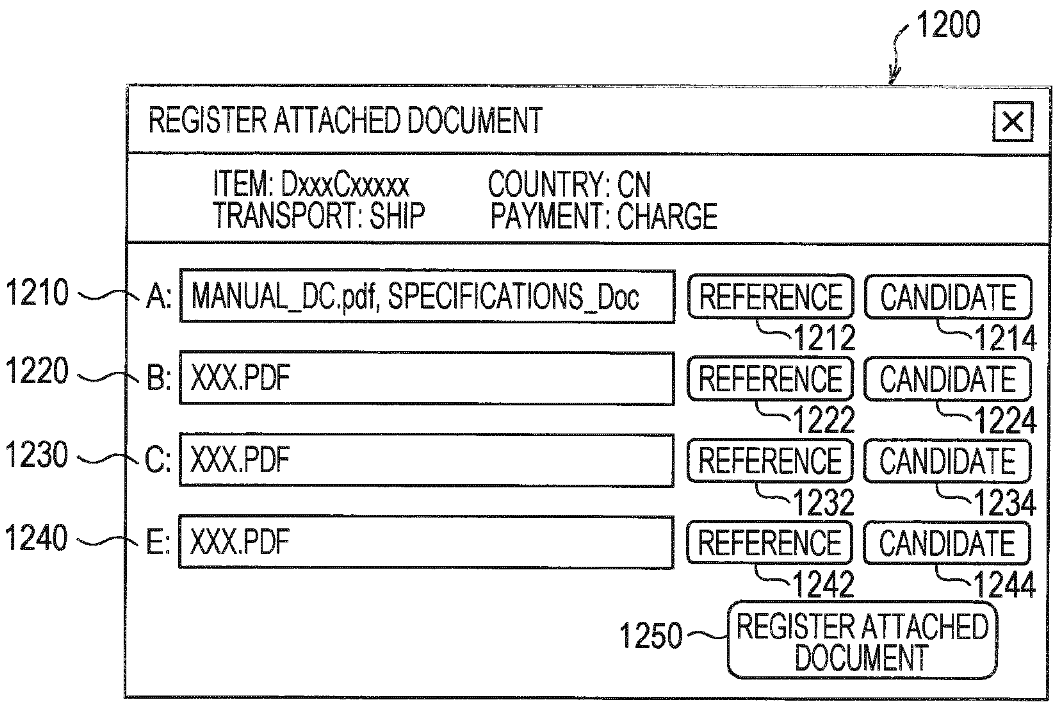
1200
REGISTER ATTACHED DOCUMENT
ITEM: DxxxCxxxxx
TRANSPORT: SHIP
COUNTRY: CN
PAYMENT: CHARGE
1210
A:
MANUAL_DC.pdf, SPECIFICATIONS_Doc
REFERENCE
CANDIDATE
1212
1214
1220
B:
XXX.PDF
REFERENCE
CANDIDATE
1222
1224
1230
C:
XXX.PDF
REFERENCE
CANDIDATE
1232
1234
1240
E:
XXX.PDF
REFERENCE
CANDIDATE
1242
1244
1250
REGISTER ATTACHED DOCUMENT

FIG. 16

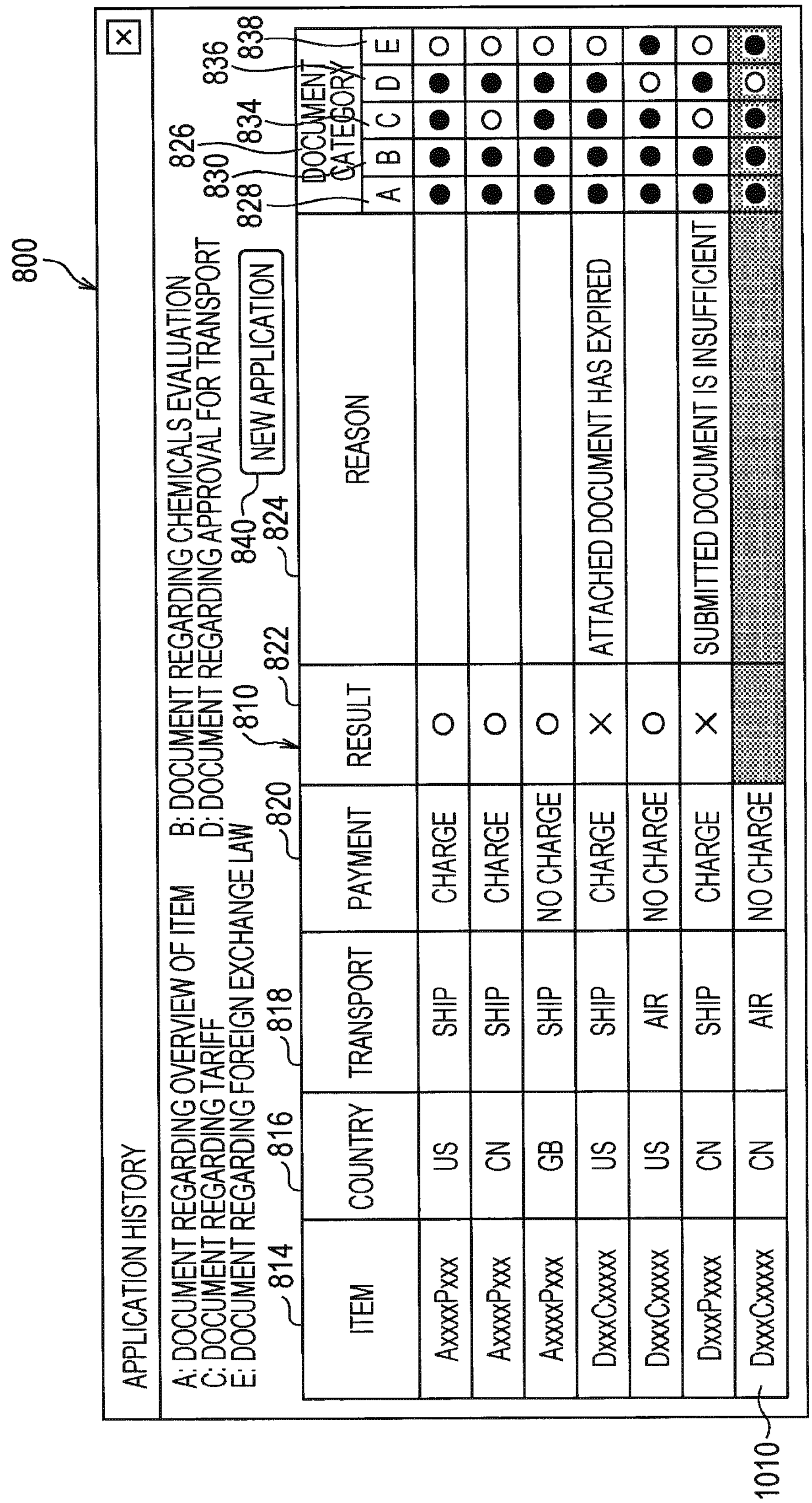
800
APPLICATION HISTORY
A: DOCUMENT REGARDING OVERVIEW OF ITEM
B: DOCUMENT REGARDING CHEMICALS EVALUATION
C: DOCUMENT REGARDING TARIFF
D: DOCUMENT REGARDING APPROVAL FOR TRANSPORT
E: DOCUMENT REGARDING FOREIGN EXCHANGE LAW
NEW APPLICATION
840
814
816
818
820
810
822
824
826
828
830
834
836
838
ITEM
COUNTRY
TRANSPORT
PAYMENT
RESULT
REASON
DOCUMENT CATEGORY
A
B
C
D
E
AxxxxPxxx
US
SHIP
CHARGE
AxxxxPxxx
CN
SHIP
CHARGE
AxxxxPxxx
GB
SHIP
NO CHARGE
DxxxCxxxxx
US
SHIP
CHARGE
ATTACHED DOCUMENT HAS EXPIRED
DxxxCxxxxx
US
AIR
NO CHARGE
DxxxPxxxx
CN
SHIP
CHARGE
SUBMITTED DOCUMENT IS INSUFFICIENT
DxxxCxxxxx
CN
AIR
NO CHARGE
1010

FIG. 17

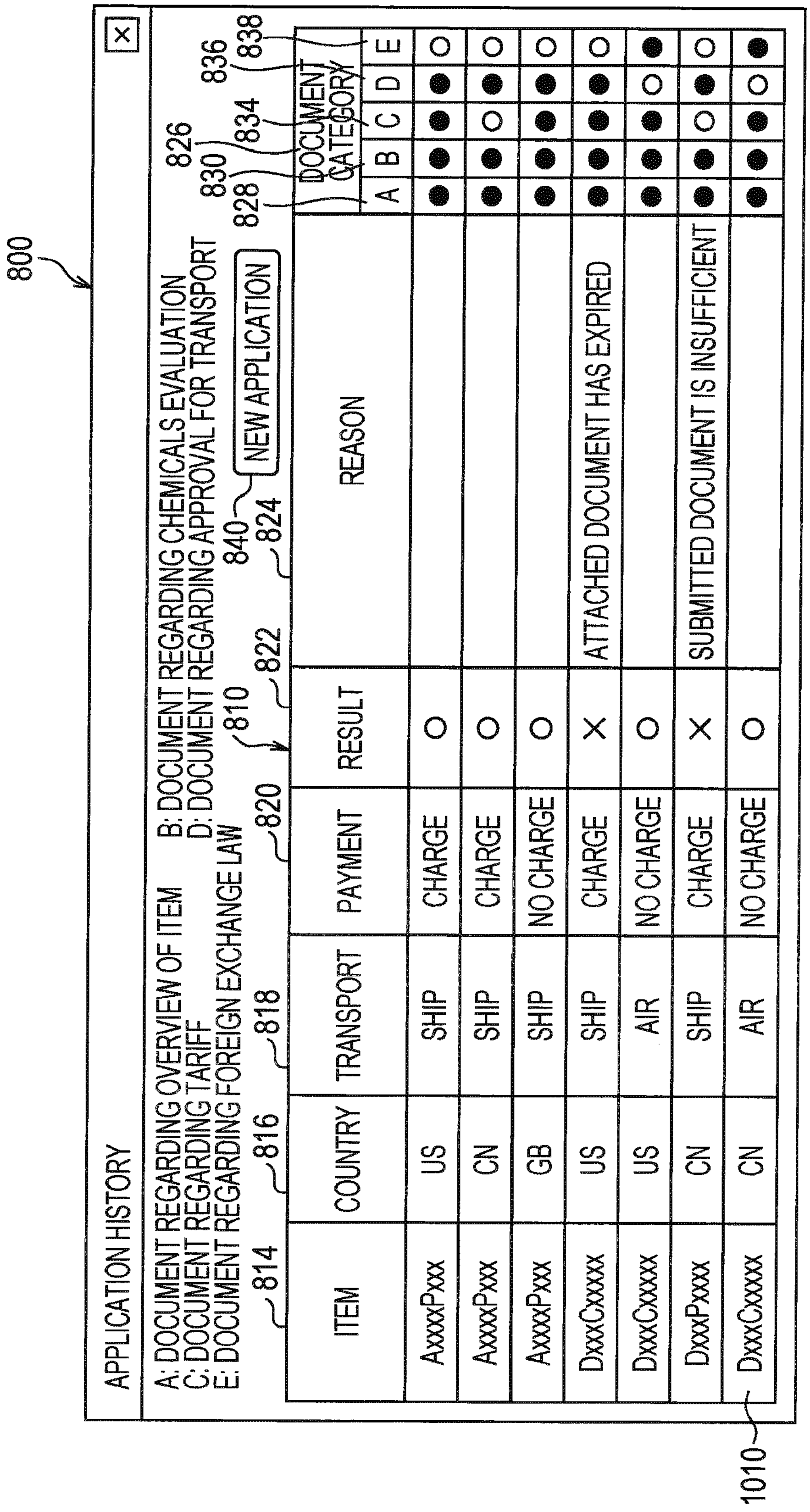
800
APPLICATION HISTORY
A: DOCUMENT REGARDING OVERVIEW OF ITEM
B: DOCUMENT REGARDING CHEMICALS EVALUATION
C: DOCUMENT REGARDING TARIFF
D: DOCUMENT REGARDING APPROVAL FOR TRANSPORT
E: DOCUMENT REGARDING FOREIGN EXCHANGE LAW
NEW APPLICATION
840
810
814
816
818
820
822
824
826
828
830
834
836
838
ITEM
COUNTRY
TRANSPORT
PAYMENT
RESULT
REASON
DOCUMENT CATEGORY
A
B
C
D
E
AxxxxPxxx
US
SHIP
CHARGE
AxxxxPxxx
CN
SHIP
CHARGE
AxxxxPxxx
GB
SHIP
NO CHARGE
DxxxCxxxxx
US
SHIP
CHARGE
ATTACHED DOCUMENT HAS EXPIRED
DxxxCxxxxx
US
AIR
NO CHARGE
DxxxPxxxx
CN
SHIP
CHARGE
SUBMITTED DOCUMENT IS INSUFFICIENT
DxxxCxxxxx
CN
AIR
NO CHARGE
1010

FIG. 18

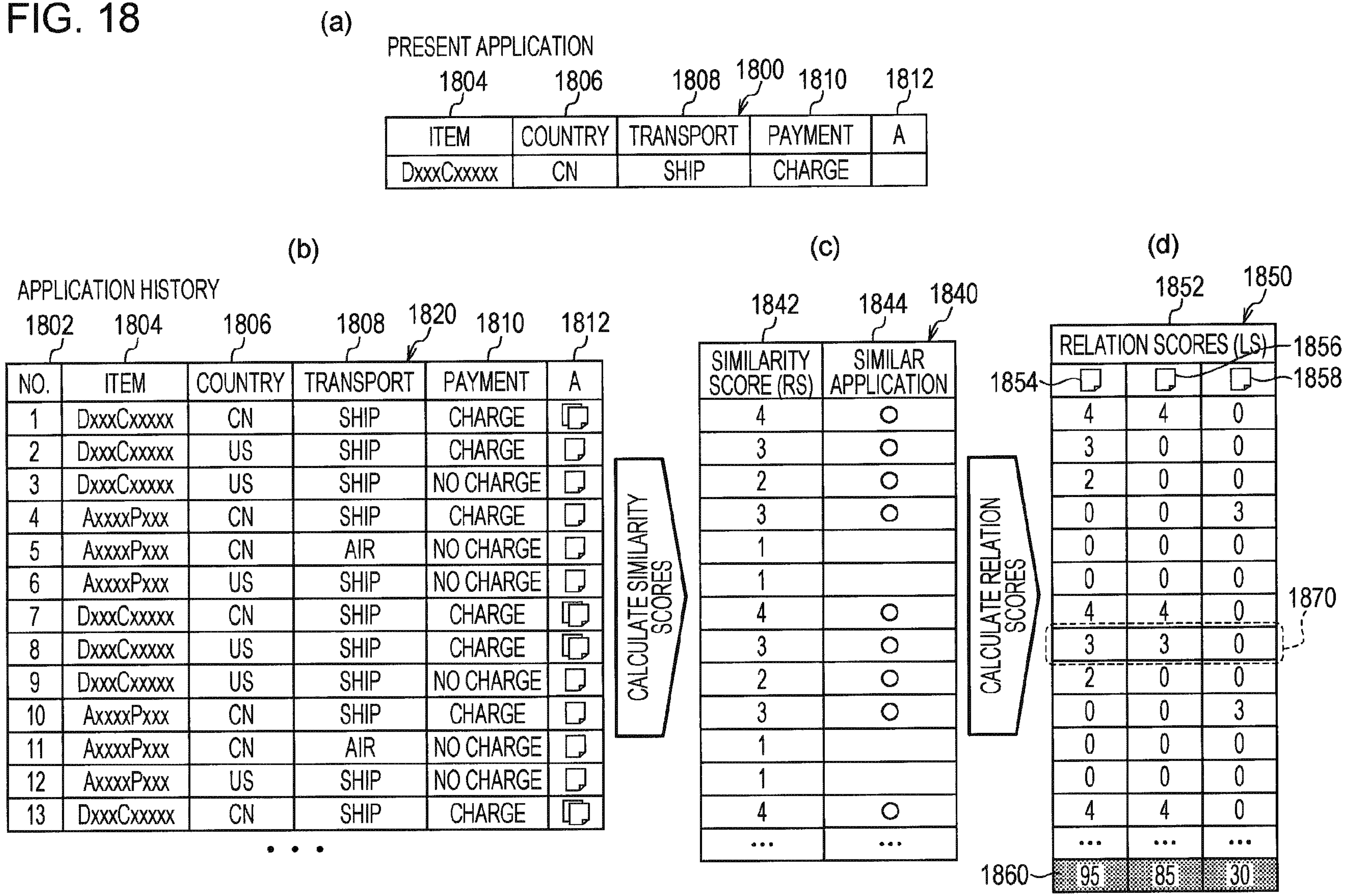

(a)
PRESENT APPLICATION
1800
1804 ITEM: DxxxCxxxxx
1806 COUNTRY: CN
1808 TRANSPORT: SHIP
1810 PAYMENT: CHARGE
1812 A
(b)
APPLICATION HISTORY
1802 1804 1806 1808 1820 1810 1812
NO. | ITEM | COUNTRY | TRANSPORT | PAYMENT | A
1 | DxxxCxxxxx | CN | SHIP | CHARGE
2 | DxxxCxxxxx | US | SHIP | CHARGE
3 | DxxxCxxxxx | US | SHIP | NO CHARGE
4 | AxxxxPxxx | CN | SHIP | CHARGE
5 | AxxxxPxxx | CN | AIR | NO CHARGE
6 | AxxxxPxxx | US | SHIP | NO CHARGE
7 | DxxxCxxxxx | CN | SHIP | CHARGE
8 | DxxxCxxxxx | US | SHIP | CHARGE
9 | DxxxCxxxxx | US | SHIP | NO CHARGE
10 | AxxxxPxxx | CN | SHIP | CHARGE
11 | AxxxxPxxx | CN | AIR | NO CHARGE
12 | AxxxxPxxx | US | SHIP | NO CHARGE
13 | DxxxCxxxxx | CN | SHIP | CHARGE
• • •
CALCULATE SIMILARITY SCORES
(c)
1840 1842 1844
SIMILARITY SCORE (RS) | SIMILAR APPLICATION
4 | O
3 | O
2 | O
3 | O
1 |
1 |
4 | O
3 | O
2 | O
3 | O
1 |
1 |
4 | O
... | ...
CALCULATE RELATION SCORES
(d)
1850 1852 1854 1856 1858 1860 1870
RELATION SCORES (LS)
4 | 4 | 0
3 | 0 | 0
2 | 0 | 0
0 | 0 | 3
0 | 0 | 0
0 | 0 | 0
4 | 4 | 0
3 | 3 | 0
2 | 0 | 0
0 | 0 | 3
0 | 0 | 0
0 | 0 | 0
4 | 4 | 0
... | ... | ...
95 | 85 | 30

FIG. 19

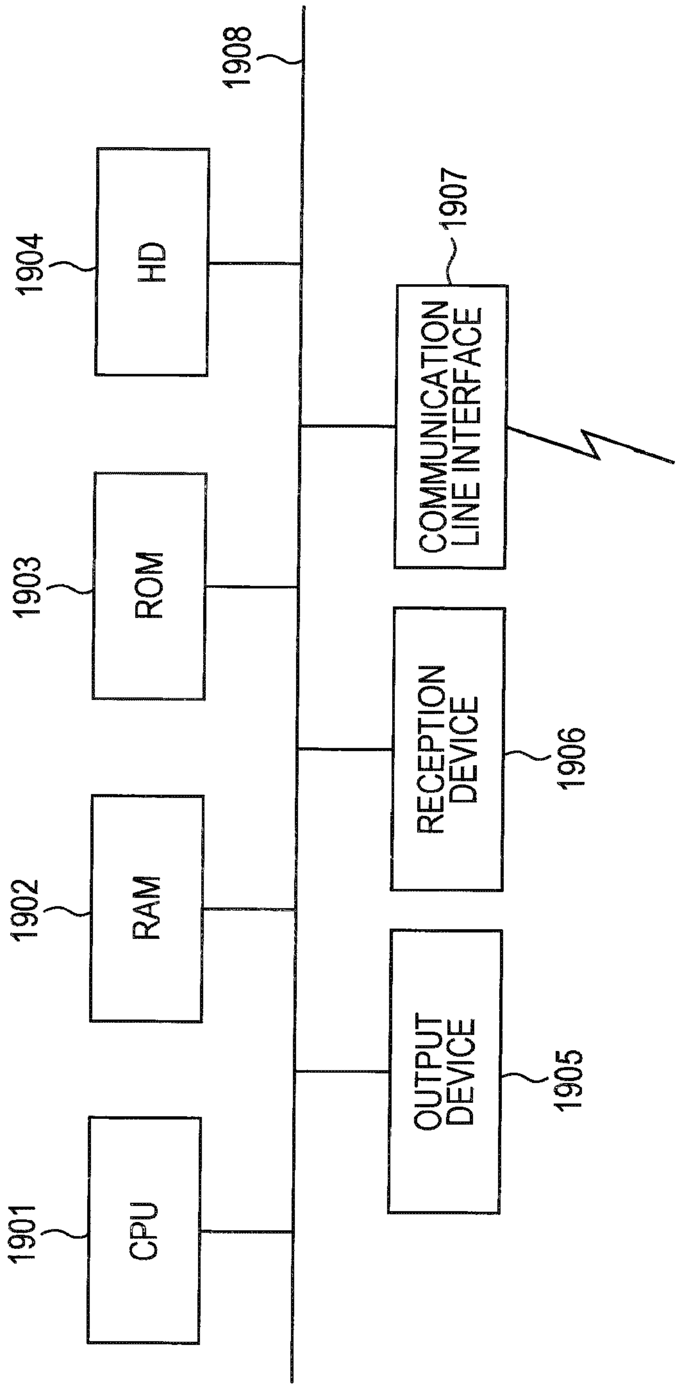
1908
1904
HD
1903
ROM
1902
RAM
1901
CPU
1907
COMMUNICATION
LINE INTERFACE
RECEPTION
DEVICE
1906
OUTPUT
DEVICE
1905

Europäisches Patentamt
European Patent Office
Office européen des brevets

# EUROPEAN SEARCH REPORT

Application Number
EP 16 15 7017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/244882 A1 (CHA WAN KYU [KR] ET AL) 18 October 2007 (2007-10-18)<br>* page 1, paragraph 10-16 *<br>* page 2, paragraph 26 - page 5, paragraph 90 *<br>* figures *<br>----- | 1-8 | INV.<br>G06Q10/06<br>G06Q10/10 |

TECHNICAL FIELDS SEARCHED (IPC)

G06Q

The present search report has been drawn up for all claims

1

| Place of search | Date of completion of the search | Examiner |
|---|---|---|
| The Hague | 24 August 2016 | Rachkov, Vassil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 16 15 7017

This annex lists the patent family members relating to the patent documents cited in the above-mentioned European search report. The members are as contained in the European Patent Office EDP file on
The European Patent Office is in no way liable for these particulars which are merely given for the purpose of information.

24-08-2016

| Patent document cited in search report | Publication date | Patent family member(s) | Publication date |
|---|---|---|---|
| US 2007244882 A1 | 18-10-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008026967 A
- JP 2008282111 A
- JP 2005346486 A